# EUROPEAN PATENT APPLICATION

(11) **EP 1 052 851 A1**
(43) Date of publication of application: **15.11.2000**
(21) Application number: 99951104.1
(22) Date of filing: 28.10.1999
(51) Int. Cl.: H04N 5/926, H04N 5/783

(54) **RECORDING/REPRODUCING APPARATUS AND METHOD**

(30) Priority: 29.10.1998 JP 30769598; 24.02.1999 JP 4679299
(71) Applicant: MATSUSHITA ELECTRIC INDUSTRIAL CO., LTD., Kadoma-shi, Osaka 571-8501 (JP)
(72) Inventor: KURAMOTO, Yoshiyasu, Kori, Neyagawa-shi, Osaka 572-0089 (JP); NAKATSU, Etsuto, Hirakata-shi, Osaka 573-0072 (JP); NAKAGAKI, Hirofumi, Room 203, Kadoma-shi, Osaka 571-0073 (JP); OKAYAMA, Mutsuyuki, Kyoto-shi, Kyoto 612-8012 (JP); MORIMOTO, Kenji, Royal Château Neyagawa Oak Bldg., Ishizu, Neyagawa-shi, Osaka 572-0024 (JP); OCHI, Atsuo, Moriguchi-shi, Osaka 570-0028 (JP)
(74) Representative: Lang, Johannes, Dipl.-Ing.
(86) International application number: JP9905953
(87) International publication number: WO0027113

(57) **Abstract**

There is provided a recording/reproducing apparatus capable of obtaining a stable trickily played image at the time of trick play by simple processing without managing time for each reproduction at a predetermined number of times the speed at the time of normal reproduction.

A normal play recording data generating portion 1 generates normal play recording data from a bit stream 201. The trick play recording data generating portion 2 generates trick play recording data from the bit stream 201. A packet generating portion 3 generates a time information packet representing time information for managing the time when a reproduced image is outputted and a control information packet representing control information for decoding trick play recording data, and outputs each of the packets to the trick play recording data generating portion 2 such that the time information and the control information are respectively recorded at predetermined positions of a trick play area. A recording portion 5 respectively records through a recording head 6 normal play recording data in a predetermined normal play area on a recording medium 202 and trick play recording data in a trick play area on a recording medium 202.

## Description

### BACKGROUND ART

The present invention relates generally to a recording/reproducing apparatus and a recording/reproducing method, and more particularly, to an apparatus and a method for performing digital recording/reproduction such that a bit stream comprising a video signal and an audio signal which are coded utilizing the correlation between screens in digital satellite broadcasting or the like can be subjected to trick play (variable speed reproduction).

### TECHNICAL FIELD

In recent years, digital satellite broadcasting using an MPEG (Moving Picture Experts Group) system has been put to practical use and paid attention to. The MPEG system is a motion compensation predictive coding system utilizing the correlation between screens, in which a plurality of frames compose GOP (Group Of Pictures). The GOP comprises an I picture (an I frame and an I field) (Intra-coded Picture), a p picture (Predictive-coded Picture), and a B picture (Bidirectionally Predictive-coded Picture). When the GOP is composed of 12 pictures, for example, IBBPBBPBBPBB, the P picture has been subjected to predictive coding from an I picture or a P picture which is three pictures ahead of the P picture, and the B picture has been subjected to bidirectional predictive coding from an I picture or a P picture ahead of and behind the B picture.

Particularly, in an MPEG2 system, data representing a coded image, voice, or the like is referred to as an elementary stream. The elementary stream is transmitted in a format called a PES (Packetized Elementary Stream) packet. The PES packet has a structure in which a PES header is followed by a PES payload that is a data part.

In the above-mentioned digital satellite broadcasting, a multiplexing system called a transport stream is generally used. In the transport stream, data representing an image, a voice, or the like is transmitted upon being divided into transmission units having a fixed length of 188 bytes which are referred to as transport packets. The transport stream includes a packet in which information for identifying PID (Packet ID) or the like which is referred to as PAT (Program Association Table) and PMT (Program Map Table) (generically referred to as PSI (Program Specific Information)) has been incorporated. A receiving device detects the PAT (the PID referred to as the PAT existing in the transport stream is a fixed value "0x000") to extract PMT in a particular program and examines the PMT to detect a packet including image or voice data to be an object, to accurately decode coded data.

When the data coded by the MPEG2 system is recorded and reproduced on a magnetic tape by a digital VTR, the data is reproduced in the order recorded in normal reproduction, so that the original image can be accurately reproduced. At the time of trick play such as high-speed search, however, a head crosses and traces the magnetic tape. Accordingly, the head traces only a part of each of tracks, so that image data cannot be accurately reproduced.

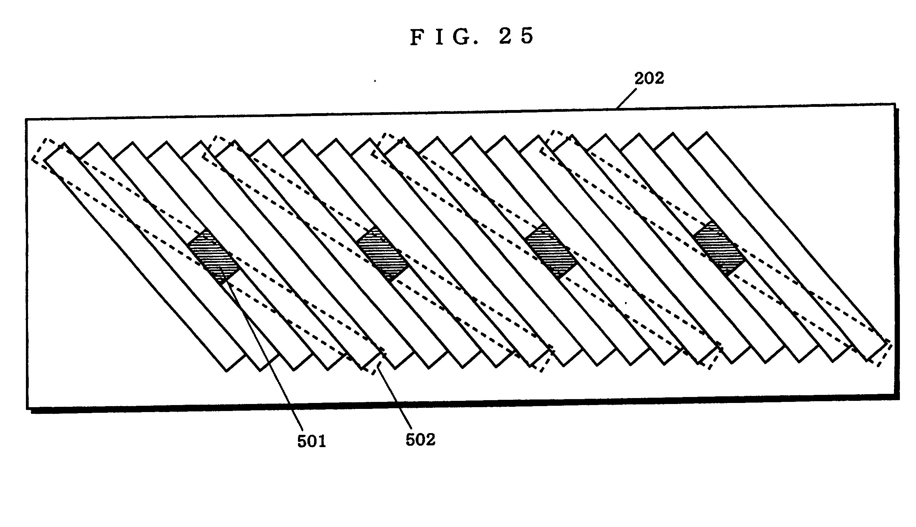

Therefore, Japanese Patent Laying-Open No.6-292123 (hereinafter referred to as prior art document), for example, discloses such a technique as to record an I picture for trick play at a predetermined position on a recording medium which can be reproduced at the time of trick play and reproduce data representing the I picture at the time of trick play to reproduce a reproduction screen. Fig. 25 is a diagram for explaining a conventional technique described in the prior art document.

As shown in Fig. 25, trick play data is recorded on a trick play area 501 (indicated by hatching in Fig. 25) at the center of a recording track on a magnetic tape 202. Further, a trace of a magnetic head in a case where the magnetic tape 202 is fast forwarded at five times the speed at the time of normal reproduction is indicated by a dotted line 502. At the time of reproduction at five times the speed, the magnetic head reproduces the trick play area 501 almost on track, thereby making it possible to stably obtain the trick play data and stabilize a reproduced image at the time of reproduction at five times the speed. Similarly, image data for other reproduction speeds are recorded at positions which can be reliably reproduced at the respective reproduction speeds, thereby making it possible to obtain stable reproduced images at the other reproduction speeds.

In a case where the recording/reproducing apparatus as described in the above-mentioned prior art document is used, to record a transport stream on a recording medium such as a magnetic tape, however, when an attempt to record the trick play data on an area different from an area where normal play data is recorded is made, it is necessary to extract the I picture for trick play from the inputted transport stream to construct a video stream, and multiplex PSI called PAT and PMT that is control information for decoding the trick play recording data to generate and record the transport stream for trick play. In this case, the PSI is multiplexed on the trick play image data, and the image data is recorded on the trick play area. Accordingly, the recording rate of the image data is decreased by an amount of the multiplexed PSI.

Particularly, the trick play area where the trick play recording data is to be recorded has no recording capacity sufficient to record data representing all I pictures to be extracted in real time, so that all I pictures composing a bit stream to be inputted are not recorded, and data representing several I pictures are decimated and recorded. Further, a time period during which data corresponding to one I picture is recorded on the trick play area on the recording medium is longer than a time interval at which the I pictures are inputted.

If time information such as PCR (Program Clock Reference), PTS (Presentation Time Stamp), or DTS (Decoding Time Stamp) which is added to a bit stream to be inputted is recorded and reproduced as it is, therefore, a problem arises in the timing of outputting an image at the time of trick play, so that a reproduced image is distorted. Even when a time interval at which the PSI that is the control information is multiplexed and the timing of multiplexing are not considered, the reproduced image is distorted when a time interval at which the PSI is obtained is long. Further, in a case where trick play is performed over two or more programs which differ in PSI, the reproduced image is distorted until new PSI is obtained when the programs are switched.

On the other hand, a method of monitoring a transmission packet interval at the time of recording with respect to each reproduction at a predetermined number of times the speed at the time of normal reproduction is considered. In such a method, however, a circuit only for performing time management for the reproduction at the predetermined number of times the speed is required, so that the circuit scale of a recording apparatus is increased. If time information is replaced at the time of reproduction, the circuit scale is increased even in constructing a reproducing apparatus.

Therefore, an object of the present invention is to provide a recording/reproducing apparatus and a recording/reproducing method in which trick play recording data is recorded on a trick play area of a recording medium by increasing the data rate thereof, to obtain a stable and high-quality trickily played image at the time of trick play by simple processing without managing time for each reproduction at a predetermined number of times the speed at the time of normal reproduction, and the trickily played image is not distorted when programs are switched.

### DISCLOSURE OF THE INVENTION

The present invention has the following features to attain the object above.

A first aspect of the present invention is directed to a recording apparatus for digitally recording on a recording medium a bit stream comprising a video signal and an audio signal which are coded utilizing the correlation between screens, the apparatus comprising:
normal play recording data generation means for generating from the bit stream to be inputted normal play recording data, used when normal reproduction is performed, composed of a plurality of predetermined recording blocks;
trick play recording data generation means for generating from the bit stream to be inputted trick play recording data, used when reproduction at a speed different from that in normal reproduction (hereinafter referred to as trick play) is performed, composed of a plurality of predetermined recording blocks by adding information outputted by packet generation means;
the packet generation means for generating a time information packet representing time information for managing the time when a reproduced image is outputted and a control information packet representing control information for decoding the trick play recording data, and outputting the packets to the trick play recording data generation means; and
recording means for recording through a recording head the normal play recording data in a normal play area to be organized on the recording medium and the trick play recording data in a trick play area to be organized on the recording medium, wherein
the time information packet and the control information packet which are outputted from the packet generation means being respectively recorded at predetermined positions inside the trick play area in a format of the trick play recording data.

As described above, according to the first aspect, the time information and the control information which are generated by the packet generation means are previously regularly recorded at predetermined positions inside the trick play area to be organized on the recording medium. Consequently, it is possible to generate the time information in a small-scale circuit. Further, the time information and the control information need not be generated at the time of trick play, so that the circuit scale of a reproducing apparatus can be reduced, which is convenient for constructing a reproduce only device.

A second aspect is characterized, in the first aspect, in that the predetermined positions are provided on the recording medium in such a manner as to be arranged at least once within a predetermined time interval in synchronization with the scanning of the recording head at the time of trick play at a predetermined number of times the speed at the time of normal reproduction.

As described above, according to the second aspect, the time information and the control information which are generated by the packet generation means are previously regularly recorded at predetermined positions inside the trick play area to be organized on the recording medium in synchronization with the scanning of the recording head. Consequently, respective packet transmission intervals required for trick play need not be individually monitored. Accordingly, it is possible to generate the time information in a small-scale circuit. Further, the time information and the control information need not be generated at the time of trick play, so that the circuit scale of a reproducing apparatus can be reduced, which is convenient for constructing a reproduce only device.

Third and fourth aspects are characterized, in the first and second aspects, in that
the packet generation means generates the time information representing a time reference value within the predetermined time interval, and adds a predetermined fixed value corresponding to the predetermined position inside the trick play area at which the time information is recorded to the previous time information, to calculate the time reference value.

As described above, according to the third and fourth aspects, the respective packet transmission intervals required for trick play need not be individually monitored. Accordingly, the time information, whose generation has been conventionally complicated, can be generated by a simple calculation of adding a fixed value corresponding to the recording position in the trick play area. Consequently, it is possible to generate the time information in a small-scale circuit. Further, the time information and the control information need not be generated at the time of trick play, so that the circuit scale of a reproducing apparatus can be reduced, which is convenient for constructing a reproduce only device.

Fifth and sixth aspects are characterized, in the first and fourth aspects, in that
the time information for managing the time when a reproduced image is outputted is found from the time reference value to be the basis of the time information and the amount of the trick play image data extracted from the bit stream to be inputted, and
the time information is a value subsequent to the time reference value at which data representing the end of the trick play image data is outputted and normalized on the basis of a frame update period on an image display device for displaying the trick play image data.

As described above, according to the fifth and sixth aspects, the time information is normalized in the frame update period on the image display device, so that it is always outputted from the head of a decoded image in an output of the image. Accordingly, it is possible to obtain a good image which is not updated to the subsequent image in the middle of the image.

Seventh and eighth aspects are characterized, in the first and sixth aspects, in that
the time information to be added to the trick play image data is a time stamp value required to output, at the time of trick play, a trickily played stream at a time interval inputted at the time of recording, and
the time stamp value is a fixed value which is synchronized with a recording track on the recording medium and corresponds to a trick play sync block number indicated in header information of each of the plurality of predetermined recording blocks composing the trick play recording data.

As described above, according to the seventh and eighth aspects, the time stamp value to be added to the trick play recording data is generated by a simple calculation from the trick play sync block number. Consequently, a circuit scale for adding the time stamp can be made smaller, as compared with that in the conventional example.

Ninth and tenth aspects are characterized, in the first and eighth aspects, in that
control information required to decode the bit stream comprising the video signal and the audio signal which are coded utilizing the correlation between the screens represents an identification number for identifying the structure of the bit stream and the content of data composing the bit stream, and
the control information for trick play recorded on the trick play area to be organized on the recording medium is information which depends on the control information included in the bit stream to be inputted and excludes the identification number relating to data which is not required to generate the trick play recording data (which is not extracted from the bit stream).

As described above, according to the ninth and tenth aspects, the control information is taken as information representing at least the identification number corresponding to data extracted for trick play by reducing the information relating to the data which is not required, thereby eliminating the possibility that a decoder is erroneously operated when an error occurs in the stream. Therefore, it is possible to reproduce a trickily played image which is more stable.

Eleventh and twelfth aspects are characterized, in the first and tenth aspects, in that
the trick play recording data generation means stores the trick play image data extracted from the bit stream in order in one memory, reads out the trick play image data stored in the memory backward (in the same direction as the order stored) to generate trick play recording data for fast forward reproduction, and reads out the trick play image data stored in the memory forward (in the direction reverse to the order stored) to generate trick play recording data for backward reproduction.

As described above, according to the eleventh and twelfth aspects, the trick play image data is stored in one memory in a predetermined order. The respective directions (orders) in which the data is read out in a case where fast forward reproducing data is generated and a case where backward reproducing data is generated are made different from each other, thereby respectively generating trick play recording data for fast forward reproduction and backward reproduction. Consequently, no memories are respectively required to generate fast forward reproducing data and backward reproducing data. Accordingly, it is possible to reduce the capacity of the memory to half.

Thirteenth and fourteenth aspects are characterized, in the eleventh and twelfth aspects, in that
the packet generation means further generates a Null packet that is invalid data in an MPEG standard, and
the trick play recording data generation means inserts, in generating the trick play recording data for fast forward reproduction and backward reproduction from the trick play image data stored in the one memory, the Null packet outputted by the packet generation means into the trick play recording data in order to compensate, when the amounts of the respective trick play recording data to be generated are less than a predetermined amount, for insufficient amounts, to fill the trick play area.

As described above, according to the thirteenth and fourteenth aspects, the trick play area is stuffed with the Null packet, thereby making it possible to prevent an area where no data is recorded from being generated in the trick play area.

A fifteenth aspect is characterized, in the eleventh aspect, in that
the trick play recording data generation means inserts, in generating the trick play recording data for fast forward reproduction and backward reproduction from the trick play image data stored in the one memory, a dummy sync block that is invalid data in a D-VHS standard into the trick play recording data in order to compensate, when the amounts of the respective trick play recording data to be generated are less than predetermined amounts, for insufficient amounts, to fill the trick play area.

As described above, according to the fifteenth aspect, the trick play area is stuffed with the dummy sync block, thereby making it possible to prevent an area where no data is recorded from being generated in the trick play area.

Sixteenth and seventeenth aspects are characterized, in the first and fourteenth aspects, by further comprising, when the bit stream is a bit stream conforming to an MPEG standard,
header analysis means for analyzing a PES header included in the bit stream to be inputted;
DSM trick mode flag setting means for setting a DSM trick mode flag in a PES header indicating that the bit stream is trick play data to a predetermined value;
memory means for storing the trick play data extracted from the bit stream as well as previously ensuring a 1-byte area for a trick mode field at a predetermined address, to insert the trick mode field into a predetermined position of the trick play data, and previously ensuring the trick mode field at a predetermined position in the PES header of the bit stream; and
trick mode field value insertion means for inserting, when the data is read out of the memory means, predetermined data representing trick play conditions into the trick mode field.

As described above, according to the sixteenth and seventeenth aspects, the trick mode field is previously ensured in the memory storing the trick play image data, thereby making it possible to easily insert the trick mode field into the stream. A trick mode field value corresponding to the trick play conditions is later set in the trick mode field of the trick play image data stored in the one memory, thereby making it possible to generate the trick play recording data for both fast forward reproduction and backward reproduction. Further, the DSM trick mode flag is correctly rewritten to generate the trick play recording data, thereby making it possible to generate a trickily played stream conforming to an MPEG standard.

Preferably, as in the eighteenth aspect, the bit stream comprising the video signal and the audio signal which are coded utilizing the correlation between the screens in the first aspect can be taken as coded data by an MPEG system.

A nineteenth aspect of the present invention is directed to a reproducing apparatus for digitally reproducing, from a recording medium on which normal play recording data and trick play recording data is recorded, the recording data, the apparatus comprising:
reproduction means for reproducing the normal play recording data and the trick play recording data which are recorded on the recording medium through a reproducing head;
trickily played stream generation means for generating a trickily played stream from the trick play recording data which has been reproduced by the reproduction means;
normally played stream generation means for reconstructing the normal play recording data which has been reproduced by the reproduction means and generating a normally played stream; and
switching means for choosing which of the normally played stream and the trickily played stream is to be outputted as a reproduced stream depending on a reproduction mode, wherein
the trickily played stream generation means outputs the N-th (N is a positive integer) trickily played stream at the time of trick play, then rewrites, when the subsequent (N+1)-th trickily played stream cannot be outputted within a predetermined time interval, time information, which is included in the N-th trickily played stream, for managing the time when a reproduced image is outputted, to a value subsequent to time information in the N-th trickily played stream and previous to time information in the subsequent (N+2)-th trickily played stream.

As described above, according to the nineteenth aspect, the trick play recording data comprising the time information and the control information, which are reproduced at the predetermined interval, recorded for trick play on the recording medium may be only reproduced and outputted at the time of trick play. Therefore, a circuit for newly generating time information and control information is not required at the time of trick play, thereby making it possible to significantly reduce the circuit scale. Further, the trickily played stream in which the time information has been rewritten is outputted again, thereby making it possible to obtain a good trickily played image which is not distorted.

Preferably, as in a twentieth aspect, the reproduced stream in the nineteenth aspect can be taken as coded data by an MPEG system.

A twenty-first aspect of the present invention is directed to a recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording the recording data on the recording medium and reproducing the recording data from the recording medium; and
reproducing data generation means for reproducing the bit stream in the normal play area at the time of normal reproduction, while reproducing the trick play data in the trick play area at the time of trick play,
the recording/reproducing apparatus further comprising
trick play data generation means for outputting trick play data including no control information for decoding the trick play data to the recording data generation means, and
trick play data processing means for replacing information in a header part of the reproduced trick play data with information corresponding to control information for decoding newly generated and outputting the information as well as inserting the control information for decoding newly generated into the reproduced trick play data within a predetermined time interval for output.

As described above, according to the twenty-first aspect, the control information for decoding is not recorded on the trick play area of the recording medium, and only the trick play image data is recorded thereon. Accordingly, the data rate of the image data which can be recorded can be made the highest, thereby making it possible to obtain a high-quality trickily played image. Even when trick play is performed over two or more programs which differ in control information for decoding, new control information for decoding is generated at the time of the trick play, the information in the header part of the reproduced trick play data is replaced with the information corresponding to the control information for decoding newly generated, and the information is outputted. Further, the control information for decoding newly generated is inserted and outputted within the predetermined time interval. Accordingly, the trickily played image is not distorted when the programs are switched.

A twenty-second aspect of the present invention is directed to a recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording the recording data on the recording medium and reproducing the recording data from the recording medium; and
reproducing data generation means for reproducing the bit stream in the normal play area at the time of normal reproduction, while reproducing the trick play data in the trick play area at the time of trick play,
the recording/reproducing apparatus further comprising
trick play data generation means for replacing, when the trick play data is recorded, information in a header part of the trick play data generated from the bit stream with information corresponding to control information for decoding newly generated and outputting the information as well as inserting the control information for decoding newly generated into the generated trick play data within a predetermined time interval and outputting the data with the inserted control information for decoding to the recording data generation means.

As described above, according to the twenty-second aspect, the control information for decoding is also recorded on the trick play area. Accordingly, the data rate of the image data to be recorded on the trick play area cannot be increased. However, the new control information for decoding is generated at the time of recording, the information in the header part of the trick play data generated from the bit stream is replaced with the information corresponding to the control information for decoding newly generated, and the information is outputted. Further, the control information for decoding newly generated is inserted, outputted, and recorded within the predetermined time interval. Accordingly, the trickily played image is not distorted when the programs are switched.

A twenty-third aspect of the present invention is directed to a recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording the recording data on the recording medium and reproducing the recording data from the recording medium; and
reproducing data generation means for reproducing the bit stream in the normal play area at the time of normal reproduction, while reproducing the trick play data in the trick play area at the time of trick play,
the recording/reproducing apparatus further comprising
trick play data generation means for replacing, when the trick play data is recorded, information in a header part of the trick play data generated from the bit stream with information corresponding to control information for decoding newly generated and outputting the information as well as inserting the control information for decoding newly generated into the generated trick play data at a second time interval longer than a first time interval and outputting the data with the inserted control information for decoding to the recording data generation means, and
trick play data processing means for detecting, at the time of trick play, control information for decoding which has been recorded on the trick play area of the recording medium, inserting the detected control information for decoding into the reproduced trick play data within the first time interval, and outputting the data with the inserted control information for decoding.

As described above, according to the twenty-third aspect, the control information for decoding is recorded on a part of the trick play area of the recording medium, and the trick play image data is recorded on a large part of the trick play area. Accordingly, the data rate of the image data which can be recorded can be increased, thereby making it possible to obtain a high-quality trickily played image. Further, the trickily played image is not distorted when the programs are switched.

A twenty-fourth aspect of the present invention is directed to a recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording the recording data on the recording medium and reproducing the recording data from the recording medium; and
reproducing data generation means for reproducing the bit stream in the normal play area at the time of normal reproduction, while reproducing the trick play data in the trick play area at the time of trick play,
the recording/reproducing apparatus further comprising
trick play data generation means for outputting trick play data including no control information for decoding the trick play data to the recording data generation means, and
trick play data processing means for detecting, at the time of normal reproduction, control information for decoding included in the bit stream in the normal play area, inserting, when the transition from normal reproduction to trick play occurs, the detected control information for decoding into the reproduced trick play data within a predetermined time interval, and outputting the data with the inserted control information for decoding.

As described above, according to the twenty-fourth aspect, the control information for decoding is not recorded on the trick play area of the recording medium, and only the trick play image data is recorded thereon. Accordingly, the data rate of the image data which can be recorded can be made the highest, thereby making it possible to obtain a high-quality trickily played image. Further, the reproduced image is not distorted at the time of the transition of modes.

A twenty-fifth aspect of the present invention is directed to a recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording the recording data on the recording medium and reproducing the recording data from the recording medium; and
reproducing data generation means for reproducing the bit stream in the normal play area at the time of normal reproduction, while reproducing the trick play data in the trick play area at the time of trick play,
the recording/reproducing apparatus further comprising
trick play data generation means for inserting, when the trick play data is recorded, control information for decoding detected from the bit stream into the generated trick play data at a second time interval longer than a first time interval, and outputting the data with the inserted control information for decoding to the recording data generation means, and
trick play data processing means for detecting, at the time of trick play, control information for decoding which has been recorded on the trick play area of the recording medium, inserting the detected control information for decoding into the reproduced trick play data within the first time interval, and outputting the data with the inserted control information for decoding.

As described above, according to the twenty-fifth aspect, the control information for decoding is recorded on a part of the trick play area of the recording medium, and the trick play image data is recorded on a large part of the trick play area. Accordingly, the data rate of the image data which can be recorded can be increased, thereby making it possible to obtain a higher-quality trickily played image.

A twenty-sixth aspect is characterized, in the twenty-fifth aspect, in that
the function of adding, when the control information for decoding is changed during a recording operation, the control information for decoding which has been changed to the head of the trick play data corresponding to the control information for decoding which has been changed is added to the trick play data generation means.

As described above, according to the twenty-sixth aspect, even when trick play is performed over two or more programs which differ in control information for decoding, the new control information for decoding is multiplexed on the head of a portion where the programs are switched. Accordingly, the trickily played image is not distorted when the programs are switched.

A twenty-seventh aspect of the present invention is directed to a recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording the recording data on the recording medium and reproducing the recording data from the recording medium; and
reproducing data generation means for reproducing the bit stream in the normal play area at the time of normal reproduction, while reproducing the trick play data in the trick play area at the time of trick play,
the recording/reproducing apparatus further comprising
trick play data generation means for adding, when the control information for decoding from the bit stream is changed during a recording operation, the control information for decoding which has been changed to only the head of the trick play data corresponding to the control information for decoding which has been changed, and outputting the data with the added control information for decoding to the recording data generation means, and
trick play data processing means for detecting and holding, at the time of the transition from normal reproduction to trick play, the control information for decoding included in the bit stream which has been reproduced at the time of normal reproduction, detecting and holding, at the time of trick play, the control information for decoding which has been reproduced from the trick play area, and inserting the control information for decoding into the reproduced trick play data at a predetermined time interval and outputting the data with the inserted control information for decoding.

As described above, according to the twenty-seventh aspect, the control information for decoding is recorded on the trick play area only when the recording is started and when the control information for decoding is changed. Accordingly, the data rate of the image data which can be recorded can be increased, thereby making it possible to obtain a higher-quality trickily played image. Even when trick play is performed over two or more programs which differ in control information for decoding, new control information for decoding is multiplexed on the head of a portion where the programs are switched. Therefore, the trickily played image is not distorted when the programs are switched.

A twenty-eighth aspect of the present invention is directed to a recording method for digitally recording on a recording medium a bit stream comprising a video signal and an audio signal which are coded utilizing the correlation between screens, the method comprising the steps of:
generating from the bit stream normal play recording data, used when normal reproduction is performed, composed of a plurality of predetermined recording blocks;
generating a time information packet representing time information for managing the time when a reproduced image is outputted and a control information packet representing control information for decoding trick play recording data;
generating from the bit stream the trick play recording data, used when reproduction at a speed different from that in normal reproduction (hereinafter referred to as trick play) is performed, composed of a plurality of predetermined recording blocks by adding the time information packet and the control information packet; and
recording through a recording head the normal play recording data in a normal play area to be organized on the recording medium and the trick play recording data in a trick play area to be organized on the recording medium, and respectively recording the time information packet and the control information packet at predetermined positions inside the trick play area in a format of the trick play recording data.

As described above, according to the twenty-eighth aspect, the time information and the control information which are generated are previously regularly recorded at predetermined positions inside the trick play area to be organized on the recording medium. Consequently, the time information can be generated in a small-scale circuit. Further, the time information and the control information need not be generated at the time of trick play, so that the circuit scale of a reproducing apparatus can be reduced, which is convenient for constructing a reproduce only device.

A twenty-ninth aspect is characterized, in the twenty-eighth aspect, in that
the predetermined positions are provided on the recording medium in such a manner as to be arranged at least once within a predetermined time interval in synchronization with the scanning of the recording head at the time of trick play at a predetermined number of times the speed at the time of normal reproduction.

As described above, according to the twenty-ninth aspect, the time information and the control information which are generated are previously regularly recorded at predetermined positions inside the trick play area to be organized on the recording medium in synchronization with the scanning of the recording head. Consequently, respective packet transmission intervals required for trick play need not be individually monitored. Accordingly, it is possible to generate the time information in a small-scale circuit. Further, the time information and the control information need not be generated at the time of trick play, so that the circuit scale of a reproducing apparatus can be reduced, which is convenient for constructing a reproduce only device.

Thirtieth and thirty-first aspects are characterized, in the twenty-eighth and twenty-ninth aspects, the method comprising the step of
generating the time information representing a time reference value within the predetermined time interval, and adding a predetermined fixed value corresponding to the predetermined position inside the trick play area where the time information is recorded to the previous time information, to calculate the time reference value.

As described above, according to the thirtieth and thirty-first aspects, the respective packet transmission intervals required for trick play need not be individually monitored. Accordingly, the time information, whose generation has been conventionally complicated, can be generated by a simple calculation for adding a fixed value corresponding to the recording position in the trick play area. Consequently, it is possible to generate the time information in a small-scale circuit. Further, the time information and the control information need not be generated at the time of trick play, so that the circuit scale of a reproducing apparatus can be reduced, which is convenient for constructing a reproduce only device.

Thirty-second and thirty-third aspects are characterized, in the twenty-eighth and thirty-first aspects, in that
the time information for managing the time when a reproduced image is outputted is found from the time reference value to be the basis of the time information and the amount of the trick play image data extracted from the bit stream to be inputted, and
the time information is a value subsequent to the time reference value at which data representing the end of the trick play image data is outputted and normalized on the basis of a frame update period on an image display device for displaying the trick play image data.

As described above, according to the thirty-second and thirty-third aspects, the time information is normalized in the frame update period on the image display device, so that it is always outputted from the head of a decoded image in an output of the image. Accordingly, it is possible to obtain a good image which is not updated to the subsequent image in the middle of the image.

Thirty-fourth and thirty-fifth aspects are characterized, in the twenty-eighth and thirty-third aspects, in that
the time information to be added to the trick play recording data is a time stamp value required to output, at the time of trick play, a trickily played stream at a time interval inputted at the time of recording, and
the time stamp value is a fixed value which is synchronized with a recording track on the recording medium and corresponds to a trick play sync block number indicated in header information of each of the plurality of predetermined recording blocks composing the trick play recording data.

As described above, according to the thirty-fourth and the thirty-fifth aspects, the time stamp value to be added to the trick play recording data is generated by a simple calculation from the trick play sync block number. Consequently, a circuit scale for adding the time stamp value can be made smaller, as compared with that in the conventional example.

Thirty-sixth and thirty-seventh aspects are characterized, in the twenty-eighth and thirty-fifth aspects, in that
control information required to decode the bit stream comprising the video signal and the audio signal which are coded utilizing the correlation between screens represents an identification number for identifying the structure of the bit stream and the content of data composing the bit stream, and
the control information for trick play recorded on the trick play area to be organized on the recording medium is information which depends on the control information included in the bit stream to be inputted and excludes the identification number relating to data which is not required to generate the trick play recording data (which is not extracted from the bit stream).

As described above, according to the thirty-sixth and thirty-seventh aspects, the control information is taken as information representing at least the identification number corresponding to data extracted for trick play by reducing the information relating to the data which is not required, thereby eliminating the possibility that a decoder is erroneously operated when an error occurs in the stream. Accordingly, it is possible to reproduce a trickily played image which is more stable.

Thirty-eighth and thirty-ninth aspects are characterized, in the twenty-eighth and thirty-seventh aspects, in that
in the step of generating the trick play recording data, the trick play image data extracted from the bit stream is stored in order in one memory, the trick play image data stored in the memory is read out backward (in the same direction as the order recorded) to generate trick play recording data for fast forward reproduction, and the trick play image data stored in the memory is read out forward (in the direction reverse to the order stored) to generate trick play recording data for backward reproduction.

As described above, according to the thirty-eighth and thirty-ninth aspects, the trick play image data is stored in the one memory in a predetermined order. The respective directions in which data is read out in a case where fast forward reproducing data is generated and a case where backward reproducing data is generated are made different from each other, thereby respectively generating trick play recording data for fast forward reproduction and backward reproduction. Consequently, no memories are respectively required to generate fast forward reproducing data and backward reproducing data. Accordingly, it is possible to reduce the capacity of the memory to half.

Fortieth and forty-first aspects are characterized, in the thirty-eighth and thirty-ninth aspects, the method further comprising the step of generating a Null packet that is invalid data in an MPEG standard, wherein
in the step of generating the trick play recording data, in generating the trick play recording data for fast forward reproduction and backward reproduction from the trick play image data stored in the one memory, the Null packet is inserted into the trick play recording data in order to compensate, when the amounts of the trick play recording data to be generated are less than predetermined amounts, for insufficient amounts, to fill the trick play area.

As described above, according to the fortieth and forty-first aspects, the trick play area is stuffed with the Null packet, thereby making it possible to prevent an area where no data is recorded from being generated in the trick play area.

A forty-second aspect is characterized, in the thirty-eighth aspect, in that
in the step of generating the trick play recording data, in generating the trick play recording data for fast forward reproduction and backward reproduction from the trick play image data stored in the one memory, a dummy sync block that is invalid data in a D-VHS standard is inserted into the trick play recording data in order to compensate, when the amounts of the respective trick play recording data to be generated are respectively less than predetermined amounts, for insufficient amounts, to fill the trick play area.

As described above, according to the forty-second aspect, the trick play area is stuffed with the dummy sync block, thereby making it possible to prevent an area where no data is recorded from being generated in the trick play area.

Forty-third and forty-fourth aspects are characterized, in the twenty-eighth and forty-first aspects, by comprising, when the bit stream to be inputted is a bit stream conforming to an MPEG standard, the steps of:
analyzing a PES header included in the bit stream to be inputted;
setting a DSM trick mode flag in a PES header indicating that the bit stream is trick play data to a predetermined value;
storing the trick play data extracted from the bit stream as well as previously ensuring a 1-byte area for a trick mode field at a predetermined address, to insert the trick mode field into a predetermined position of the trick play data, and previously ensuring the trick mode field at the predetermined position in the PES header of the bit stream; and
inserting, when the data is read out at the ensuring step and the subsequent steps, predetermined data representing trick play conditions into the trick mode field.

As described above, according to the forty-third and forty-fourth aspects, the trick mode field is previously ensured in the memory storing the trick play image data, thereby making it possible to easily insert the trick mode field into the stream. A trick mode field value corresponding to the trick play conditions is later set in the trick mode field of the trick play image data stored in the one memory, thereby making it possible to generate the trick play recording data for both fast forward reproduction and backward reproduction. Further, the DSM trick mode flag is correctly rewritten to generate the trick play recording data, thereby making it possible to generate a trickily played stream conforming to an MPEG standard.

Preferably, as in the forty-fifth aspect, the bit stream comprising the video signal and the audio signal which are coded utilizing the correlation between the screens in the twenty-eighth aspect can be taken as coded data by an MPEG system.

A forty-sixth aspect of the present invention is directed to a reproducing method for digitally reproducing, from a recording medium on which normal play recording data and trick play recording data is recorded, the recording data, the method comprising the steps of:
reproducing the normal play recording data and the trick play recording data which are recorded on the recording medium through a reproducing head;
reconstructing the reproduced normal play recording data and generating a normally played stream;
generating a trickily played stream from the reproduced trick play recording data;
outputting the N-th (N is a positive integer) trickily played stream at the time of trick play, then rewriting, when the subsequent (N+1)-th trickily played stream cannot be outputted within a predetermined time interval, time information, which is included in the N-th trickily played stream, for managing the time when a reproduced image is outputted, to a value subsequent to time information in the N-th trickily played stream and previous to time information in the subsequent (N+2)-th trickily played stream; and
choosing which of the normally played stream and the trickily played stream is to be outputted as a reproduced stream depending on a reproduction mode.

As described above, according to the forty-sixth aspect, the trick play recording data comprising the time information and the control information, which are reproduced at the predetermined interval, recorded for trick play on the recording medium may be only reproduced and outputted at the time of trick play. Therefore, a circuit for newly generating time information and control information is not required at the time of trick play, thereby making it possible to significantly reduce the circuit scale. Further, the trickily played stream in which the time information has been rewritten is outputted again, thereby making it possible to obtain a good trickily played image which is not distorted.

Preferably, as in the forty-seventh aspect, the reproduced stream in the forty-sixth aspect can be taken as coded data by an MPEG system.

A forty-eighth aspect of the present invention is directed to a recording/reproducing method for recording and reproducing on a recording medium a bit stream comprising a video signal and an audio signal which are coded utilizing the correlation between screens, the method comprising the steps of:
generating trick play data from the bit stream such that control information for decoding trick play data is not included;
generating recording data for recording the bit stream and the trick play data, respectively, in a normal play area and a trick play area of a recording medium;
recording the recording data on the recording medium;
reproducing, at the time of normal reproduction, the bit stream in the normal play area from the recording medium, while reproducing, at the time of trick play, the trick play data in the trick play area from the recording medium; and
replacing, at the time of trick play, information in a header part of the reproduced trick play data with information corresponding to control information for decoding newly generated as well as inserting the control information for decoding newly generated into the reproduced trick play data within a predetermined time interval.

As described above, according to the forty-eighth aspect, the control information for decoding is not recorded on the trick play area of the recording medium, and only the trick play image data is recorded thereon. Accordingly, the data rate of the image data which can be recorded can be made the highest, thereby making it possible to obtain a high-quality trickily played image. Even when trick play is performed over two or more programs which differ in control information for decoding, new control information for decoding is generated at the time of the trick play, the information in the header part of the reproduced trick play data is replaced with the information corresponding to the control information for decoding newly generated, and the information is outputted. Further, the control information for decoding newly generated is inserted and outputted within the predetermined time interval. Accordingly, the trickily played image is not distorted when the programs are switched.

A forty-ninth aspect of the present invention is directed to a recording/reproducing method for recording and reproducing on a recording medium a bit stream comprising a video signal and an audio signal which are coded utilizing the correlation between screens, the method comprising the steps of:
generating trick play data from the bit stream;
replacing information in a header part of trick play data with information corresponding to control information for decoding newly generated;
inserting the control information for decoding newly generated into the generated trick play data within a predetermined time interval;
generating recording data for recording the bit stream and the trick play data, respectively, in a normal play area and a trick play area of the recording medium;
recording the recording data on the recording medium; and
reproducing, at the time of normal reproduction, the bit stream in the normal play area from the recording medium, while reproducing, at the time of trick play, the trick play data in the trick play area from the recording medium.

As described above, according to the forty-ninth aspect, the control information for decoding is also recorded on the trick play area. Accordingly, the data rate of the image data to be recorded on the trick play area cannot be increased. However, the new control information for decoding is generated at the time of recording, the information in the header part of the trick play data generated from the bit stream is replaced with the information corresponding to the control information for decoding newly generated, and the information is outputted. Further, the control information for decoding newly generated is inserted, outputted, and recorded within the predetermined time interval. Accordingly, the trickily played image is not distorted when the programs are switched.

A fiftieth aspect of the present invention is directed to a recording/reproducing method for recording and reproducing on a recording medium a bit stream comprising a video signal and an audio signal which are coded utilizing the correlation between screens, the method comprising the steps of:
generating trick play data from the bit stream;
replacing information in a header part of trick play data with information corresponding to control information for decoding newly generated;
inserting the control information for decoding newly generated into the generated trick play data at a second time interval longer than a first time interval;
generating recording data for recording the bit stream and the trick play data, respectively, in a normal play area and a trick play area of the recording medium;
recording the recording data on the recording medium;
reproducing, at the time of normal reproduction, the bit stream in the normal play area from the recording medium, while reproducing, at the time of trick play, the trick play data in the trick play area from the recording medium; and
detecting, at the time of trick play, control information for decoding which has been recorded on the trick play area of the recording medium, and inserting the detected control information for decoding into the reproduced trick play data within the first time interval.

As described above, according to the fiftieth aspect, the control information for decoding is recorded on a part of the trick play area of the recording medium, and the trick play image data is recorded on a large part of the trick play area. Accordingly, the data rate of the image data which can be recorded can be increased, thereby making it possible to obtain a higher-quality trickily played image. Further, the trickily played image is not distorted when the programs are switched.

A fifty-first aspect of the present invention is directed to a recording/reproducing method for recording and reproducing on a recording medium a bit stream comprising a video signal and an audio signal which are coded utilizing the correlation between screens, the method comprising the steps of:
generating trick play data from the bit stream such that control information for decoding trick play data is not included;
generating recording data for recording the bit stream and the trick play data, respectively, in a normal play area and a trick play area of the recording medium;
recording the recording data on the recording medium;
reproducing, at the time of normal reproduction, the bit stream in the normal play area from the recording medium, while reproducing, at the time of trick play, the trick play data in the trick play area from the recording medium;
detecting, at the time of normal reproduction, control information for decoding included in the reproduced bit stream; and
inserting, at the time of the transition from normal reproduction to trick play, the detected control information for decoding into the reproduced trick play data within a predetermined time interval.

As described above, according to the fifty-first aspect, the control information for decoding is not recorded on the trick play area of the recording medium, and only the trick play image data is recorded thereon. Accordingly, the data rate of the image data which can be recorded can be made the highest, thereby making it possible to obtain a high-quality trickily played image. Further, the reproduced image is not distorted at the time of the transition of modes.

A fifty-second aspect of the present invention is directed to a recording/reproducing method for recording and reproducing on a recording medium a bit stream comprising a video signal and an audio signal which are coded utilizing the correlation between screens, the method comprising the steps of:
generating trick play data from the bit stream;
detecting control information for decoding from the bit stream, and inserting the control information for decoding into the generated trick play data at a second time interval longer than a first time interval;
generating recording data for recording the bit stream and the trick play data, respectively, in a normal play area and a trick play area of the recording medium;
recording the recording data on the recording medium;
reproducing, at the time of normal reproduction, the bit stream in the normal play area from the recording medium, while reproducing, at the time of trick play, the trick play data in the trick play area from the recording medium;
detecting, at the time of trick play, control information for decoding which has been recorded on the trick play area of the recording medium, and inserting the detected control information for decoding into the reproduced trick play data within the first time interval.

As described above, according to the fifty-second aspect, the control information for decoding is recorded on a part of the trick play area of the recording medium, and the trick play image data is recorded on a large part of the trick play area. Accordingly, the data rate of the image data which can be recorded can be increased, thereby making it possible to obtain a high-quality trickily played image.

A fifty-third aspect is characterized, in the fifty-second aspect, the method further comprising the step of
adding, when the control information for decoding is changed during a recording operation, the control information for decoding which has been changed to the head of the trick play data corresponding to the control information for decoding which has been changed.

As described above, according to the fifty-third aspect, even when trick play is performed over two or more programs which differ in control information for decoding, the new control information for decoding is multiplexed on the head of a portion where the programs are switched. Accordingly, the trickily played image is not distorted when the programs are switched.

A fifth-fourth aspect of the present invention is directed to a recording/reproducing method for recording and reproducing on a recording medium a bit stream comprising a video signal and an audio signal which are coded utilizing the correlation between screens, the method comprising the steps of:
generating trick play data from the bit stream;
detecting control information for decoding from the bit stream, and inserting the control information for decoding into the generated trick play data at a second time interval longer than a first time interval;
adding, when the control information for decoding from the bit stream is changed during a recording operation, the control information for decoding which has been changed to only the head of the trick play data corresponding to the control information for decoding which has been changed;
generating recording data for recording the bit stream and the trick play data, respectively, in a normal play area and a trick play area of the recording medium;
recording the recording data on the recording medium;
reproducing, at the time of normal reproduction, the bit stream in the normal play area from the recording medium, while reproducing, at the time of trick play, the trick play data in the trick play area from the recording medium;
detecting and holding, at the time of the transition from normal reproduction to trick play, the control information for decoding included in the bit stream which has been reproduced at the time of normal reproduction; and
detecting and holding, at the time of trick play, the control information for decoding which has been reproduced from the trick play area, and inserting the held control information for decoding into the reproduced trick play data within a predetermined time interval.

As described above, according to the fifty-fourth aspect, the control information for decoding is recorded on the trick play area only when the recording is started and when the control information for decoding is changed. Accordingly, the data rate of the image data which can be recorded can be increased, thereby making it possible to obtain a higher-quality trickily played image. Even when trick play is performed over two or more programs which differ in control information for decoding, new control information for decoding is multiplexed on the head of a portion where the programs are switched. Therefore, the trickily played image is not distorted when the programs are switched.

### BRIEF DESCRIPTION OF THE DRAWINGS

FIG. 1 is a block diagram showing the configuration of a recording apparatus according to a first embodiment of the present invention;
FIG. 2 is a block diagram showing the more detailed configurations of a trick play recording data generating portion 2, a packet generating portion 3, and a recording portion 5 shown in Fig. 1;
FIG. 3 is a diagram showing the relationship between a transport packet and a sync block;
FIG. 4 is a diagram for explaining the extraction of an I picture and the reduction of the amount of data;
FIG. 5 is a schematic view showing a recording track on a recording medium 202 on which fast forward reproducing recording data is to be recorded;
FIG. 6 is a diagram for explaining an example of predetermined positions, where time information and control information are respectively recorded, on the recording medium 202;
FIG. 7 is a diagram showing an example of the relationship of predetermined positions, where time information and control information are respectively recorded, on the recording medium 202;
FIG. 8 is a diagram for explaining the difference between a packet for generating normal play recording data and a packet for generating trick play recording data;
FIG. 9 is a block diagram showing the configuration of a recording apparatus according to a second embodiment of the present invention;
FIG. 10 is a diagram showing an example of the relationship of a time stamp value to be generated to a trick play sync block number;
FIG. 11 is a diagram showing an example in which trick play image data is stored in a memory map in a memory 23;
FIG. 12 is a diagram showing an example of the position where trick play recording data for twelve times the speed at the time of normal reproduction is recorded on a recording medium 202;
FIG. 13 is a block diagram showing the configuration of a recording apparatus according to a fourth embodiment of the present invention;
FIG. 14 is a block diagram showing the detailed configuration of a DSM generating portion shown in Fig. 13 and a memory 23;
FIG. 15 is a diagram showing an example of the structure of the memory 23;
FIG. 16 is a block diagram showing the configuration of a reproducing apparatus according to a fifth embodiment of the present invention;
FIG. 17 is a diagram for explaining the retransmission of I picture data in a trick play packetizing portion 104;
FIG. 18 is a block diagram showing the configuration of a recording/reproducing apparatus according to a sixth embodiment of the present invention;
FIG. 19 is a block diagram showing the configuration of a recording/reproducing apparatus according to a seventh embodiment of the present invention;
FIG. 20 is a block diagram showing the configuration of a recording/reproducing apparatus according to an eighth embodiment of the present invention;
FIG. 21 is a block diagram showing the configuration of a recording/reproducing apparatus according to a ninth embodiment of the present invention;
FIG. 22 is a block diagram showing the configuration of a recording/reproducing apparatus according to a tenth embodiment of the present invention;
FIG. 23 is a block diagram showing the configuration of a recording/reproducing apparatus according to an eleventh embodiment of the present invention;
FIG. 24 is a diagram for explaining PSI which is multiplexed on a compressed I frame in the eleventh embodiment of the present invention; and
FIG. 25 is a schematic view showing the shape of a recording track on a magnetic tape and a trace of a head at the time of trick play in a conventional recording/reproducing apparatus.

### BEST MODE FOR CARRYING OUT THE INVENTION

Embodiments of the present invention will be described by taking as an example a case where an MPEG transport stream is a bit stream comprising a video signal and an audio signal which are coded utilizing the correlation between screens.

### (First Embodiment)

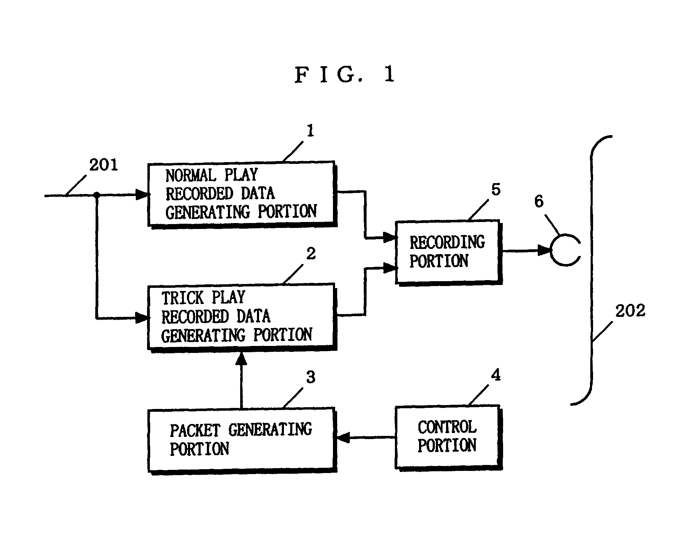

Fig. 1 is a block diagram showing the configuration of a recording apparatus according to a first embodiment of the present invention. In Fig. 1, the recording apparatus according to the first embodiment comprises a normal play recording data generating portion 1, a trick play recording data generating portion 2, a packet generating portion 3, a control portion 4, a recording portion 5, and a recording head 6.

The normal play recording data generating portion 1 and the trick play recording data generating portion 2 respectively receive a bit stream 201 in a transport packet format comprising a video signal and an audio signal which are coded utilizing the correlation between screens. The normal play recording data generating portion 1 generates recording data for normal reproduction which is composed of a plurality of predetermined recording blocks from the inputted bit stream 201. The trick play recording data generating portion 2 generates recording data for trick play (fast forward reproduction, backward reproduction, etc.) which is composed of a plurality of predetermined recording blocks from the inputted bit stream 201. The packet generating portion 3 generates a time information packet representing time information for managing the time when a reproduced image is outputted and a control information packet representing control information for decoding the trick play recording data, and outputs the packets to the trick play recording data generating portion 2. The control portion 4 feeds a reference signal required for the packet generating portion 3 to generate the time information packet and the control information packet. The recording portion 5 determines, in order to respectively record the normal play recording data and the trick play recording data in predetermined areas on a recording medium 202, the order in which both the data is recorded. The recording head 6 is a head device for recording the data on the recording medium 202, for example, a magnetic head. The recording medium 202 is a tape-shaped recording medium, for example, a magnetic tape. Typically, the recording portion 5 and the recording head 6 are so constructed that a group of magnetic heads on a rotating drum forms a helical track on the magnetic tape 202 to record the normal play data and the trick play data.

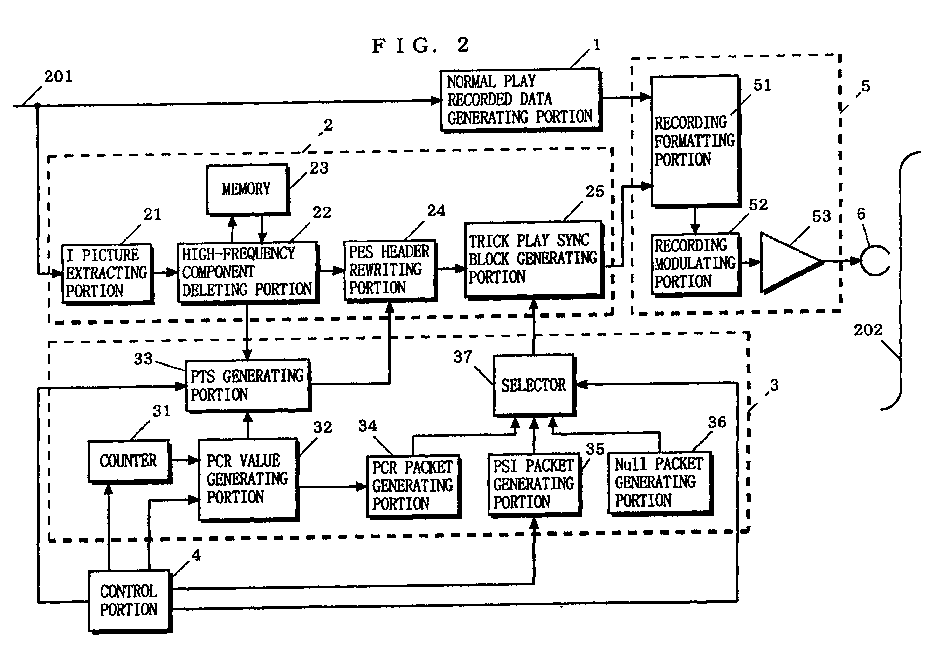

Referring now to Figs. 2 to 8, the more detailed configuration of the recording apparatus according to the first embodiment which is configured as described above is illustrated, to successively describe the operations thereof.

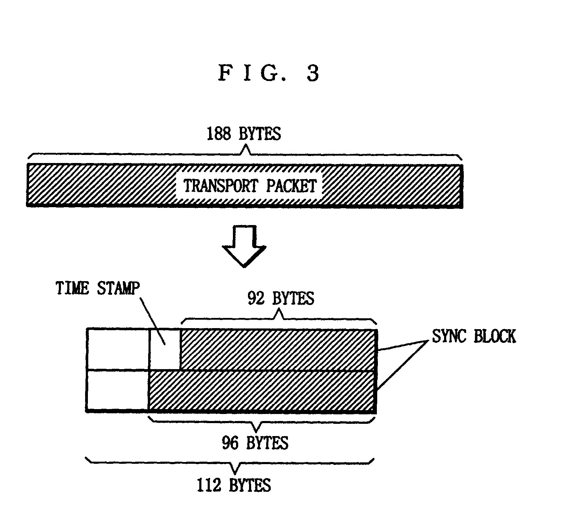

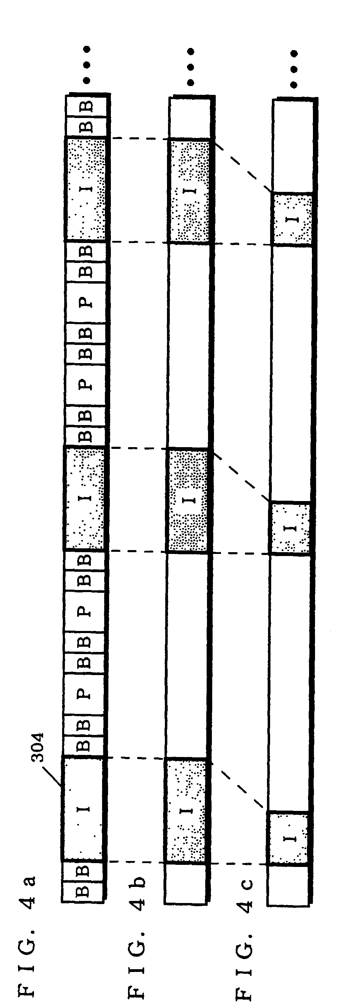

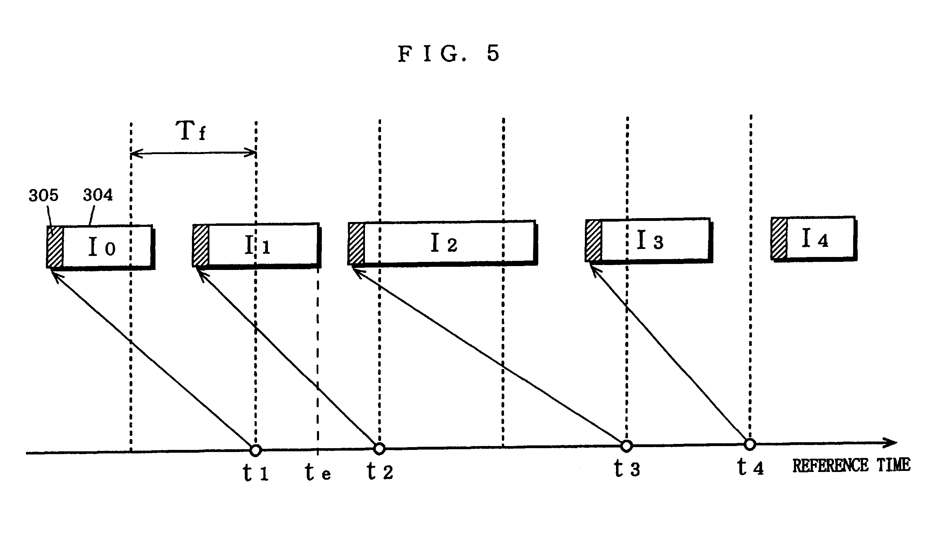

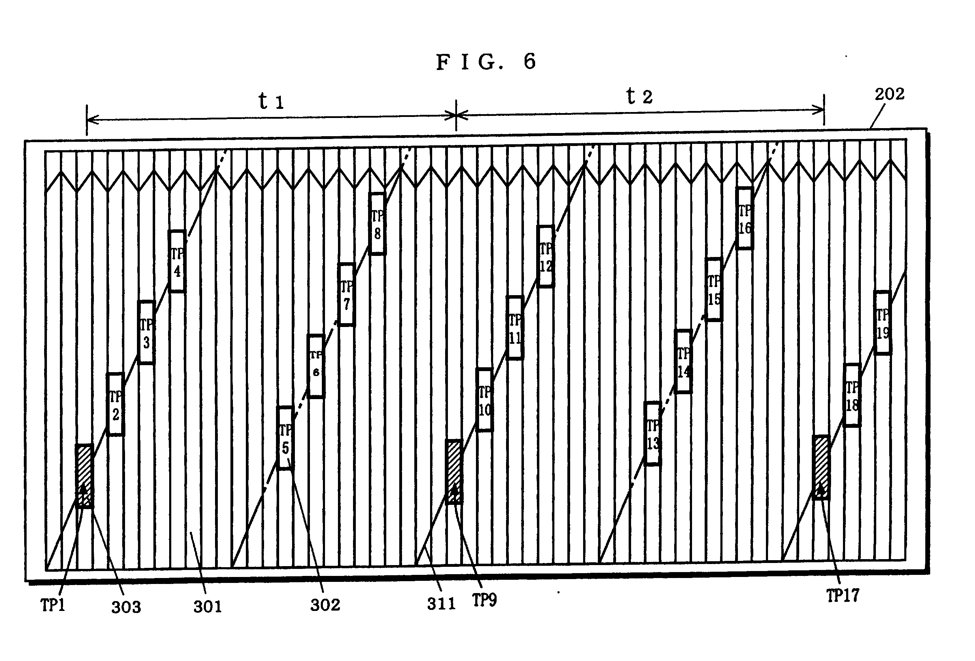

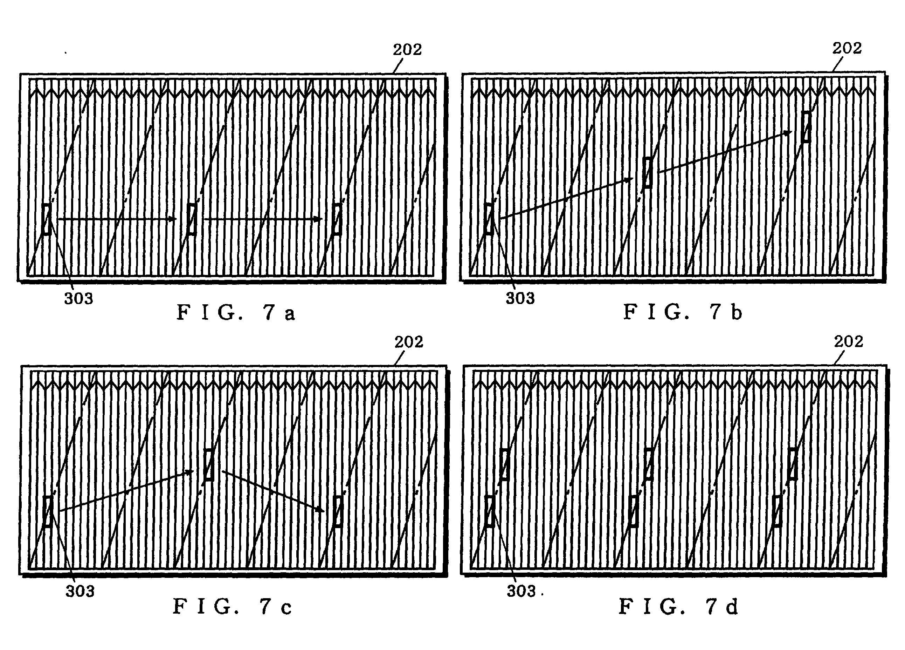

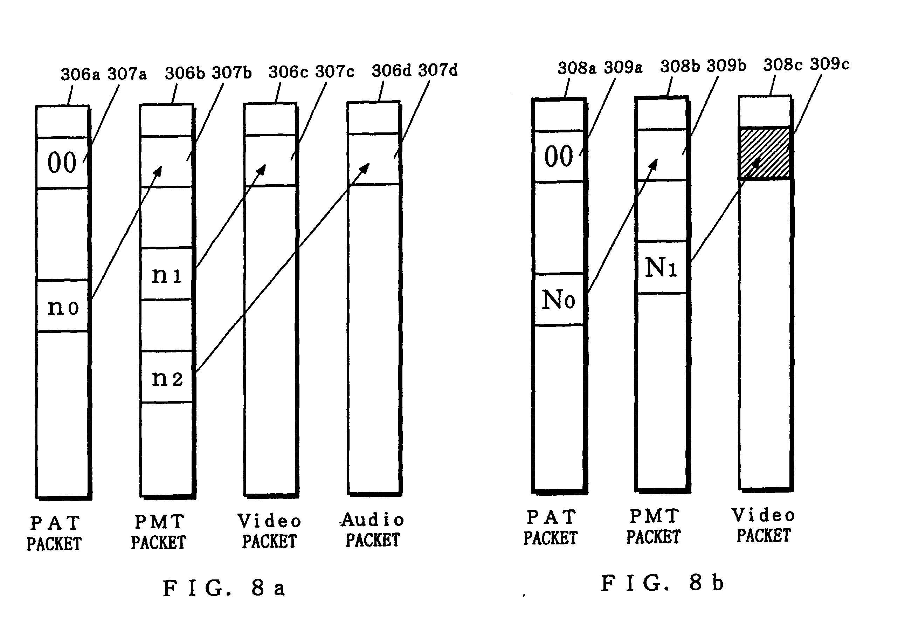

Fig. 2 is a block diagram showing the more detailed configuration of the trick play recording data generating portion 2, the packet generating portion 3, and the recording portion 5 shown in Fig. 1. Fig. 3 is a diagram showing the relationship between a transport packet and a sync block. Fig. 4 is a diagram for explaining the extraction of an I picture and the reduction of the amount of data. In Fig. 4, Fig. 4 (a) illustrates an example of the structure of the bit stream 201, where 12 pictures comprising I, P, and B compose one GOP. Fig. 5 is a diagram showing an example of the generation of PTS. Fig. 6 is a schematic view of a recording track on the recording medium 202 on which the fast forward reproducing recording data is to be recorded. Fig. 7 is a diagram for explaining an example of predetermined positions, where the time information and the control information are to be respectively recorded, on the recording medium 202. Fig. 8 is a diagram for explaining the difference between a control information packet in the case of the normal play recording data and a control information packet in the case of the trick play recording data.

In Fig. 2, the trick play recording data generating portion 2 comprises an I picture extracting portion 21, a high-frequency component deleting portion 22, a memory 23, a PES header rewriting portion 24, and a trick play sync block generating portion 25. The packet generating portion 3 comprises a counting portion 31, a PCR value generating portion 32, a PTS generating portion 33, a PCR packet generating portion 34, a PSI packet generating portion 35, a Null packet generating portion 36, and a selecting portion 37. Further, the recording portion 5 comprises a recording formatting portion 51, a recording modulating portion 52, and a recording amplifier 53.

The bit stream 201 in the transport packet format is inputted to the normal play recording data generating portion 1 and the I picture extracting portion 21.

The normal play recording data generating portion 1 first generates a normal play data string composed of a plurality of recording blocks from the inputted bit stream 201. The recording block is referred to as a sync block, and is 112 bytes long, as shown in Fig. 3. The two sync blocks compose one transport packet.

The data string composed of normal play sync blocks thus generated (hereinafter referred to as normal play recording data) is successively outputted to the recording formatting portion 51.

The I picture extracting portion 21 extracts only a stream composing an I picture to be a trickily played image (Fig. 4 (b)) from the inputted bit stream 201 (Fig. 4 (a)), and outputs the stream to the high-frequency component deleting portion 22 as I picture data. The I picture extracting portion 21 examines a PAT packet and a PMT packet that are control information of the stream included in the bit stream 201 to extract an image data stream to be an object, and further examines a header part representing information relating to the stream in the bit stream 201 to extract only the stream composing the I picture that is data coded in a frame.

The high-frequency component deleting portion 22 deletes an AC coefficient representing a high-frequency component of the coded data from the I picture data outputted from the I picture extracting portion 21, to reduce the amount of the data (Fig. 4 (c)). If the I picture data is image data compressed by discrete cosine transform (DCT), for example, the amount of the data can be easily compressed by reducing the number of effective AC coefficients. The amount of the data to be deleted is not uniquely determined, and can be freely set on the basis of a desired image quality, a limit to a recording area on the recording medium 202, and so forth.

By thus reducing the amount of the data, a high-frequency component of trickily played image at the time of trick play is lost, so that the image is blurred. On the other hand, an update period of an I picture is shortened, so that the image is generically easy to see.

The high-frequency component deleting portion 22 stores in the memory 23 the I picture data which has been subjected to the high-frequency component deletion processing (hereinafter referred to as trick play image data), and outputs the amount of the trick play image data to the PTS generating portion 33.

On the other hand, the control portion 4 outputs a scan switching signal representing the scanning state of the recording head 6, the number of revolutions of a cylinder of the recording head 6, a frame rate control signal representing the frame update period on an image displaying device (not shown) for reproducing and displaying recording data, and an output packet switching signal for recording a packet at a predetermined position, respectively, to the counting portion 31, the PCR value generating portion 32, the PTS generating portion 33, and the selecting portion 37.

The counting portion 31 counts the number of times of scanning of the magnetic tape 202 by the recording head 6 in accordance with the scan switching signal inputted from the control portion 4, and outputs, every time the number of times of scanning reaches n, a scan signal to the PCR value generating portion 32. The PCR value generating portion 32 generates a PCR value representing the reference time of the coded data by simple calculation for switching an offset value corresponding to the number of revolutions of the cylinder on the basis of the scan signal inputted from the counting portion 31 and the number of revolutions of the cylinder which is inputted from the control portion 4, and outputs the PCR value to the PTS generating portion 33 and the PCR packet generating portion 34. The PTS generating portion 33 receives the amount of the trick play image data, the frame rate control signal, and the PCR value, respectively, from the high-frequency component deleting portion 22, the control portion 4, and the PCR value generating portion 32, and normalizes and generates a PTS field value that is time information representing the timing of outputting image data decoded at the time of reproduction in accordance with a frame rate control signal, and outputs the PTS field value to the PES header rewriting portion 24. A method of normalizing the PTS field value in accordance with the frame rate control signal will be described with reference to Fig. 5.

As shown in Fig. 5, each I picture data 304 has a PTS field 305 representing PTS in its header part. In Fig. 5, a time interval Tf represents a frame update period on an image output device, and the horizontal axis represents reference time.

PTS is a value for outputting a decoded image, so that it must be at least a value subsequent to the time when data representing the end of data composing an image is inputted. Consequently, the PTS generating portion 33 first relates the reference time outputted from the PCR value generating portion 32 to the frame update period Tf represented by the frame rate control signal outputted from the control portion 4 such that a predetermined time relationship between a decoder and the image output device coincides with when a trickily played image is outputted. The PTS generating portion 33 normalizes and generates the PTS value such that it is time subsequent to the time when data representing the end of the I picture data is outputted at the time of trick play and is synchronized with the frame update period Tf. Therefore, the PTS value is a discrete value which can be taken for each frame update period Tf.

Description is made of I picture data I1 shown in Fig. 5, for example. The time when data representing the end of the I picture data I1 is outputted is te. Accordingly, as a candidate for a PTS value, a value t2, closest to te, which satisfies the relationship of PTS > te and is synchronized with the frame update period is a PTS value of the I picture data I1. Each PTS value thus generated is rewritten as a PTS field value in a PES header part of the I picture data in the PES header rewriting portion 24.

The PTS value is thus normalized in the frame update period Tf on the image output device, so that it is always outputted from the head of the decoded image in an output of the image. Accordingly, it is possible to obtain a good image which is not updated to the subsequent image in the middle of the image.

Referring to Fig. 2 again, the PCR packet generating portion 34 generates a PCR packet on the basis of the PCR value inputted from the PCR value generating portion 32, and outputs the PCR packet to the selecting portion 37 for each predetermined time period. The PSI packet generating portion 35 previously has a control information packet (a PAT packet and a PMT packet) having a fixed value for trick play, and outputs the control information packet to the selecting portion 37 for each predetermined time period. The Null packet generating portion 36 generates a Null packet that is invalid data having no meaning in an MPEG standard, and outputs the Null packet to the selecting portion 37. The selecting portion 37 outputs to the trick play sync block generating portion 25 any one of the PCR packet outputted from the PCR packet generating portion 34, the PAT packet outputted from the PSI packet generating portion 35, and the Null packet outputted from the Null packet generating portion 36 in accordance with the output packet switching signal inputted from the control portion 4. In a case where no Null packet is required (in a case where stuffing, described later, is not performed, for example), it is possible to omit the Null packet generating portion 36.

The relationship between predetermined positions where time information and control information are respectively recorded and a PCR value that is reference time will be described by taking as an example of fast forward trick play with reference to Fig. 6.

In a normal play area 301, normal play recording data is recorded. Trick play recording data is recorded in a trick play area 302 indicated by TP1 to TP19. Time information and control information for trick play are respectively recorded at predetermined intervals t1 and t2 in predetermined positions 303 indicated by TP1, TP9, and TP17 (indicated by hatching in Fig. 6) on the trick play area 302. Fig. 6 indicates a case where t1 and t2 are the same interval. The predetermined intervals t1 and t2 take a value satisfying not more than 100 ms that is a maximum allowable output interval at the time of trick play between a time information packet and a control information packet which are determined in the MPEG standard. For example, consider the case of fast forward reproduction at twelve times the speed at the time of normal reproduction. A head to be reproduced is scanned along a trace 311 (indicated by a one-dot line in Fig. 6), to successively reproduce trick play recording data which are recorded on the trick play areas 302 and 303 indicated by TP1 to TP19. At this time, data in the trick play area 303 where the time information and the control information for trick play are recorded is reproduced, so that the time information packet and the control information packet can be outputted in conformity with the MPEG standard without being inserted at the time of trick play.

The relationship between a predetermined recording position and a PCR value that is time information to be recorded will be described.

The time information is previously regularly recorded for each predetermined time interval, as described above, thereby determining the position where the time information is to be recorded. In Fig. 6, the time when the TP9 is reproduced is after an elapse of t1 since the TP1 was reproduced. Accordingly, a PCR value recorded on the TP9 (which is taken as PCR9) is obtained by adding an offset value corresponding to t1 to a PCR value recorded on the TP1 (which is taken as PCR1), that is, (PCR9) = (PCR1) + (an offset value corresponding to t1). The same is true for the TP17. That is, when a PCR value recorded on the TP17 is taken as PCR17, (PCR17) = (PCR9) + (an offset value corresponding to t2). Consequently, the PCR value can be generated by a simple calculation for each predetermined position where time information is to be recorded.

A predetermined interval at which time information is recorded may not be t1 or a combination of t1 and t2, described above. For example, it may be, of course, a combination of an increased number of intervals, for example, t1, t2, and t3.

An example of predetermined positions where time information and control information are respectively recorded on the recording medium 202 will be described with reference to Fig. 7.

Fig. 7 (a) illustrates a case where t1 and t2 are the same (t1 = t2), and are synchronized with the scanning of the head at the time of trick play. Every time the time information and the control information for trick play are recorded, they are recorded on an area assigned the same trick play sync block number (the number of an area where one sync block is recorded on the recording medium 202). Fig. 7 (b) illustrates a case where t1 and t2 are the same (t1 = t2), and are not synchronized with the scanning of the head at the time of trick play. The time information and the control information are respectively recorded on areas assigned different trick play sync block numbers for each recording. Fig. 7 (c) illustrates a case where t1 is larger than t2 (t1 > t2). The time information and the control information for trick play are periodically recorded at an interval of (t1 + t2). Fig. 7 (d) illustrates a case where t1 is smaller than t2 (t1 < t2). A trick play area where the time information and the control information are recorded is recorded so as to be reproduced twice by one scanning of the head in trick play.

A specific example of the position where the time information is recorded will be described. In a D-VHS standard, trick play sync block numbers for recording data is 0 to 101. In the case of fast forward reproducing data, the time information is recorded on the positions where trick play sync blocks having trick play sync block numbers 98 and 99 are respectively recorded. In the case of backward reproducing data, the time information is recorded on the positions where trick play sync blocks having trick play sync block numbers 2 and 3 are respectively recorded. The time information and the control information for trick play which are to be recorded are in a transport packet format. One transport packet is composed of two sync blocks. Accordingly, two sync blocks are required for recording. The trick play sync block numbers are not limited to the above-mentioned values 0 to 101. The other values may be used.

The time information and the control information may exist on the trick play area to be trickily played. In the trick play area where the time information and the control information are to be recorded may be an area other than the head or the end of the trick play area which is synchronized with the scanning of the head at the time of trick play, as described above. The time information and the control information may be recorded on different trick play areas. An interval at which the time information is recorded and an interval at which the control information is recorded may be the same or different from each other. Further, the time information packet and the control information packet may be recorded on continuous areas. Alternatively, a plurality of time information or a plurality of control information may be repeatedly recorded within the same trick play area.

Referring to Fig. 2 again, the PES header rewriting portion 24 rewrites a PTS field value included in the PES header part of the trick play image data (I picture data) stream inputted from the high-frequency component deleting portion 22 to a PTS field value outputted by the PTS generating portion 33. The PES header rewriting portion 24 also rewrites, if there is any DTS field, the PES header, as required, by deleting the DTS field, to output the rewritten PES header to the trick play sync block generating portion 25.

The trick play sync block generating portion 25 multiplexes the trick play image data (I picture data) stream for trick play which is outputted by the PES header rewriting portion 24 and the time information packet and the control information packet which are selectively outputted by the selecting portion 37, and generates a data string composed of trick play sync blocks which are trick play recording data (hereinafter referred to as trick play recording data) from data in a transport packet format, similarly to the processing described in the normal play recording data generating portion 1.

The generated trick play recording data is successively outputted to the recording formatting portion 51.

Referring to Fig. 8, description is made of the difference between a control information packet in the case of normal play recording data and a control information packet in the case of trick play recording data. In Fig. 8, Fig. 8 (a) illustrates a control information packet in the case of normal play recording data, and Fig. 8 (b) illustrates a control information packet in the case of trick play recording data.

The normal play recording data is generated by changing the PAT packet and the PMT packet which are control information in the inputted bit stream 201, and a video data packet and an audio data packet other than the control information into sync blocks as they are. In the example shown in Fig. 8 (a), PID 307a in a PAT packet 306a is "0", and "n0" that is PID 307b in a PMT packet 306b is indicated in the PAT packet 306a. "n1" that is PID 307c in a video data packet 306c and "n2" that is PID 307d in an audio data packet 306d are indicated in the PMT packet 306b.

On the other hand, in the generation of the trick play recording data, only the I picture data is extracted for trick play from the bit stream 201 inputted as described above, and the other data such as audio data is not extracted. Consequently, the control information (the PAT packet and the PMT packet) in the inputted bit stream 201 includes information relating to data other than the I picture data which has not been extracted as the trick play recording data. A PAT packet 308a and a PMT packet 308b are the control information for trick play in which the control information relating to the extracted image data (I picture data) is held, and from which the control information relating to the data which has not been extracted is deleted are newly generated, and a video data packet 308c indicated in the PMT packet 308b is changed into sync blocks, to generate trick play recording data.

Therefore, in the example shown in Fig. 8 (b), PID in the control information generated for trick play (the PAT packet 308a and the PMT packet 308b) has the same value as the PID in the control information for normal reproduction (the PAT packet 306a and the PMT packet 306b). However, the PID in the video data represented by the PMT packet 308b is only "N1" that is PID 309c in the extracted video data packet 308c.

Unnecessary information is thus deleted by generating the control information for trick play again, thereby eliminating the possibility that a decoder is erroneously operated when an error occurs in the stream. Accordingly, it is possible to reproduce a trickily played image which is more stable.

Although description was made of a case where there is one program indicated by the PAT packet 306a or 308a in Fig. 8, the same is true for a case where there are two or more programs. The PID indicated by the PMT packet 308b is not limited to only one corresponding to the above-mentioned video data. It may be one corresponding to another data.

Referring to Fig. 2 again, the recording formatting portion 51 receives the normal play recording data in a sync block format which is outputted from the normal play recording data (sync block) generating portion 1 and the trick play recording data in a sync block format which is outputted from the trick play sync block generating portion 25, to generate a recording data string in accordance with a predetermined recording format such that the normal play recording data and the trick play recording data can be respectively recorded on the normal play area and the trick play area.

The recording modulating portion 52 converts the recording data string outputted by the recording formatting portion 51 into a signal in a format suitable for a magnetic recording/reproducing system, and outputs the signal to the recording amplifier 53. The recording amplifier 53 subjects the recording data string inputted from the recording modulating portion 52 to predetermined amplification processing, and then outputs the recording data string to the recording head 6. The recording head 6 successively records the recording data string outputted from the recording amplifier 53 to the magnetic tape 202.

At this time, the time information and the control information for trick play which are outputted for each predetermined time interval in the packet generating portion 3 are regularly arranged, respectively, at predetermined positions of the trick play area to be organized on the magnetic tape 202, as described above.

As described above, in the recording apparatus according to the first embodiment of the present invention, the time information and the control information which are generated by the packet generating portion 3 are previously regularly recorded at the predetermined positions inside the trick play area to be organized on the recording medium 202 in synchronization with the scanning of the recording head 6. Consequently, respective packet transmission intervals required for the trick play need not be individually monitored. The time information, whose generation has been conventionally complicated, can be generated by a simple calculation for adding a fixed value corresponding to the recording position in the trick play area. Accordingly, the time information can be generated in a small-scale circuit. Further, the time information and the control information need not be generated at the time of trick play, so that the circuit scale of a reproducing apparatus can be reduced, which is convenient for constructing a reproduce only device.

Although, in the above-mentioned first embodiment, the I picture data is used as data for generating the trick play recording data, P picture data or B picture data may be used.

In the above-mentioned first embodiment, description was made by taking as an example a case where the MPEG transport stream is used as an object. According, PCR and PTS are used as the time information, and PAT and PMT are used as the control information. When a bit stream comprising a video signal and an audio signal which are coded utilizing the correlation between screens, other than the MPEG transport stream, is used, however, time information and control information which correspond to the bit stream may be used.

### (Second Embodiment)

In a second embodiment of the present invention, in consideration of the necessity for a reproduced stream outputted at the time of trick play to be outputted upon holding a predetermined time interval inputted at the time of recording such that no problem arises at the time of decoding, time (a time stamp) for controlling the output of the reproduced stream is added to a trick play sync block.

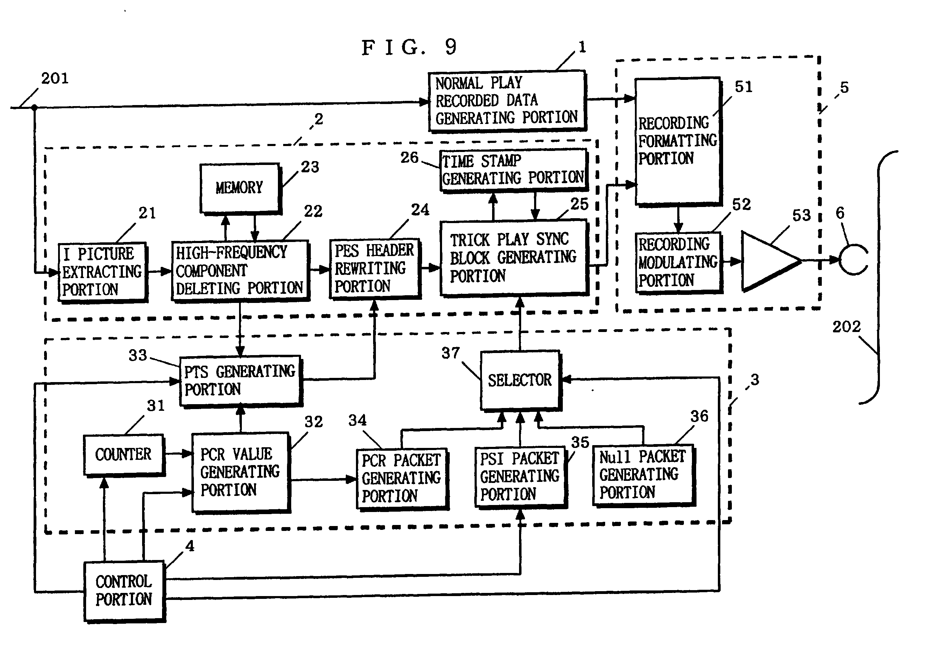

Fig. 9 is a block diagram showing the configuration of a recording apparatus according to the second embodiment of the present invention. In Fig. 9, the recording apparatus according to the second embodiment comprises the normal play recording data generating portion 1, the trick play recording data generating portion 2, the packet generating portion 3, the control portion 4, the recording portion 5, and the recording head 6.

The trick play recording data generating portion 2 comprises the I picture extracting portion 21, the high-frequency component deleting portion 22, the memory 23, the PES header rewriting portion 24, the trick play sync block generating portion 25, and a time stamp generating portion 26. The packet generating portion 3 comprises the counting portion 31, the PCR value generating portion 32, the PTS generating portion 33, the PCR packet generating portion 34, the PSI packet generating portion 35, and the selecting portion 37. Further, the recording portion 5 comprises the recording formatting portion 51, the recording modulating portion 52, and the recording amplifier 53.

As shown in Fig. 9, the recording apparatus according to the second embodiment has the same configuration as that of the recording apparatus according to the first embodiment except that the time stamp generating portion 26 is added to the trick play recording data generating portion 2 in the recording apparatus according to the first embodiment. The same portions are assigned the same reference numerals and hence, the description thereof is not repeated.

The trick play sync block generating portion 25 outputs to the time stamp generating portion 26 trick play sync block numbers indicated in a header part of a trick play sync block (for example, 0 to 101. This value does not limit the trick play sync block number), and requests a time stamp value to be added to the trick play sync block. The time stamp generating portion 26 generates a fixed time stamp value which has a one-to-one correspondence with each of the trick play sync block numbers inputted from the trick play sync block generating portion 25, and returns the time stamp value to the trick play sync block generating portion 25. The trick play sync block generating portion 25 receives the time stamp value returned from the time stamp generating portion 26, and inserts the time stamp value into a time stamp area (see Fig. 3) included in a header information part of each sync block. Thereafter, the trick play sync block generating portion 25 outputs the trick play sync blocks into which the time stamp values are respectively inserted to the recording formatting portion 51 as trick play recording data.

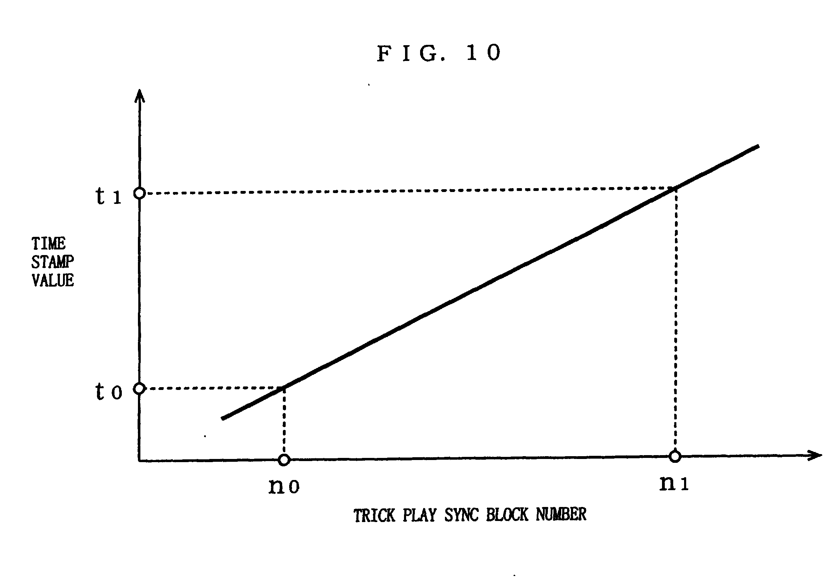

Fig. 10 is a diagram showing an example of the relationship of a generated time stamp value to a trick play sync block number. As shown in Fig. 10, the trick play sync block number and the time stamp value have a one-to-one correspondence with each other. The time stamp value is t0 when the trick play sync block number is n0, while being t1 when the trick play sync block number is n1. In the time stamp generating portion 26, a translation table or a simple operating circuit having characteristics as shown in Fig. 10 are prepared, thereby making it possible to simply obtain the time stamp value.

As described above, the recording apparatus according to the second embodiment of the present invention comprises the time stamp generating portion 26 for generating the time stamp value by the translation table or the simple calculation, to generate from the trick play sync block number a time stamp to be added to the trick play recording data. Consequently, the circuit scale for adding the time stamp can be made smaller, as compared with that in the conventional example.

### (Third Embodiment)

The configuration of a recording apparatus according to a third embodiment of the present invention is the same as that of the recording apparatus according to the first embodiment except that in the trick play recording data generating portion 2 in the first embodiment, trick play recording data for both fast forward reproduction and backward reproduction are generated from trick play image data stored in one memory. The same portions are assigned the same reference numerals and hence, the description thereof is not repeated.

The high-frequency component deleting portion 22 deletes an AC coefficient representing a high-frequency component of coded data from I picture data outputted from the I picture extracting portion 21 to reduce the amount of the data, and successively stores trick play image data (the I picture data which has been subjected to high-frequency component deletion processing) in the memory 23. The high-frequency component deleting portion 22 creates a memory map inside the memory 23, to successively store the trick play image data.

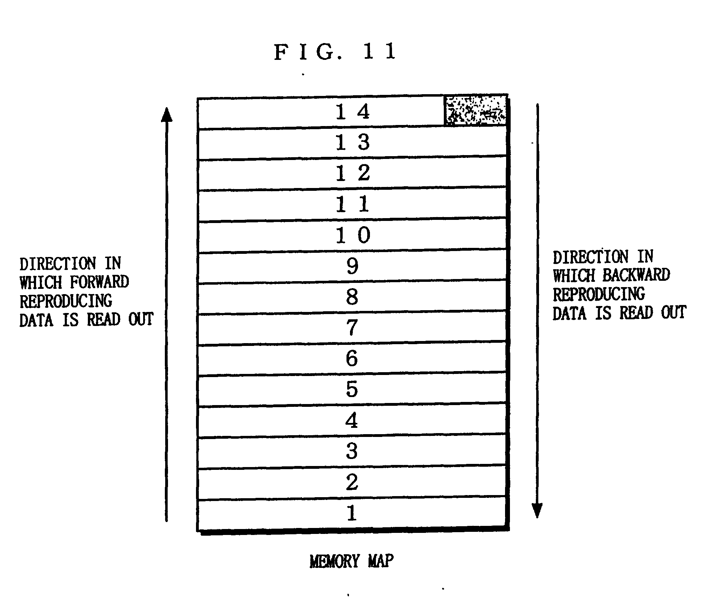

Fig. 11 is a diagram showing an example in which trick play image data is stored in the memory map inside the memory 23. In Fig. 11, first to fourteenth blocks in the memory map respectively correspond to the amounts of data composing the trick play image data stored in one trick play area. The first block corresponds to data representing the head of the trick play image data, and the fourteenth block corresponds to data representing the end of the trick play image data. The data corresponding to the fourteenth block indicates that the amount of the data is smaller than the block size. The high-frequency component deleting portion 22 thus successively stores the trick play image data in the memory map in the memory 23.

It will be described how the trick play image data stored in the memory map in the memory 23 as described above is used.

First, when fast forward reproducing data is generated, the high-frequency component deleting portion 22 successively reads out the data corresponding to the first block at the head of the trick play image data stored in the memory map in the memory 23 to the data corresponding to the fourteenth block at the end thereof in this order, to output the trick play image data read out to the PES header rewriting portion 24.

On the other hand, when backward reproducing data is generated, the high-frequency component deleting portion 22 successively reads out the data corresponding to the fourteenth block at the end of the trick play image data stored in the memory map in the memory 23 to the data corresponding to the first block at the head thereof in this order, to output the trick play image data read out to the PES header rewriting portion 24. In this case, however, the amount of the data corresponding to the fourteenth block is less than the amount of the data to be read out. Accordingly, the high-frequency component deleting portion 22 reads out a data part corresponding to the insufficient amount forward from the end of the thirteenth block, thereby reading out the amount of the data corresponding to one block. Thereafter, the high-frequency component deleting portion 22 reads out the data by performing the same processing for each of the blocks. When the data corresponding to the first block is read out, therefore, the high-frequency component deleting portion 22 reads out data whose amount is less than the amount of one block. A data part corresponding to the insufficient amount is processed by inserting, when the trick play recording data is generated in the trick play sync block generating portion 25, a Null packet generated by the Null packet generating portion 36 into the data part through the selecting portion 37 to constitute data corresponding to one block.

In the high-frequency component deleting portion 22, the generation of fast forward reproducing data and the generation of backward reproducing data is concurrently performed to read out the trick play image data, and either one of them is first completed because the fast forward reproducing data and the backward reproducing data differ in the trick play area to be recorded on the recording medium 202. In this case, the high-frequency component deleting portion 22 waits, even if either one of the generation of the fast forward reproducing data and the generation of the backward reproducing data is completed to read out the trick play image data, until the other generation is completed, not to start the writing of the subsequent trick play image data into the memory 23. Specifically, the high-frequency component deleting portion 22 writes, after both the generation of the fast forward reproducing data and the generation of the backward reproducing data is terminated to read out the trick play image data, the subsequent trick play image data into the memory 23. The high-frequency component deleting portion 22 starts to read out the subsequent trick play image data when the preparation of the subsequent trick play image data (storage into a memory map) is completed.

Description is now made of the trick play area to be organized on the recording medium 202.

In the trick play area, there exist a fast forward reproducing area and a backward reproducing area which correspond to a reproduction speed different from that in normal reproduction. The trick play recording data recorded on the respective areas are so arranged as to be reproduced in a correct order at the time of trick play. The trick play recording data for fast forward reproduction are recorded in the order backward from the head of the trick play recording data because the direction of trick play is the same as that at the time of recording. However, the trick play recording data for backward reproduction are recorded in the order forward from the end of the trick play recording data so as to be correctly reproduced at the time of backward reproduction because the direction of trick play is opposite to that at the time of recording.

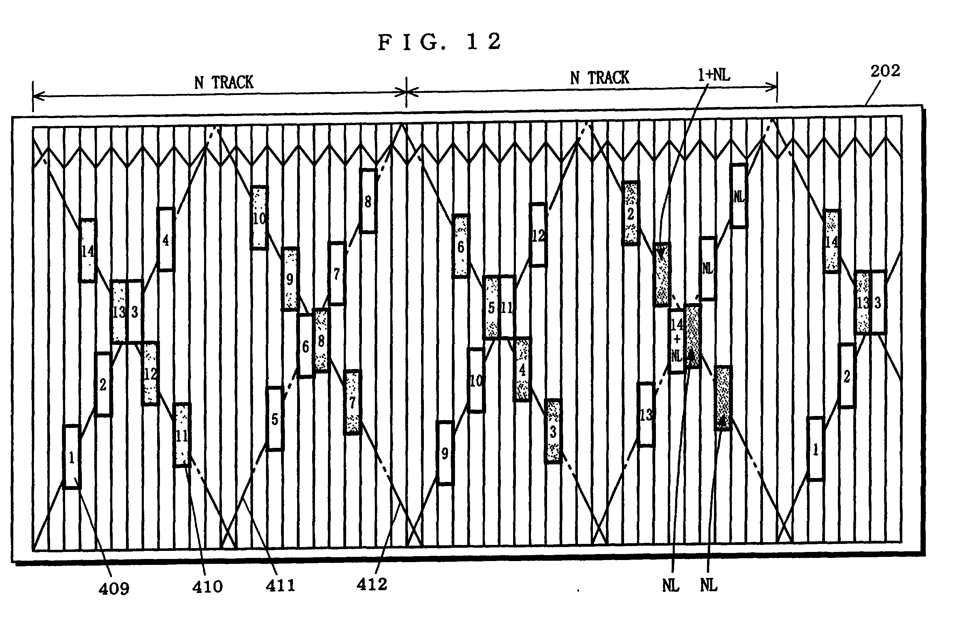

Fig. 12 is a diagram showing an example of the position where trick play recording data for twelve times the speed at the time of normal reproduction is recorded on the recording medium 202. In Fig. 12, a trick play area 409 is an area where trick play recording data for fast forward reproduction is to be recorded, and a trick play area 410 is an area where trick play recording data for backward reproduction is to be recorded. A trace 411 represents a trace of a head at the time of fast forward reproduction, and a trace 412 represents a trace of a head at the time of backward reproduction. N indicates the number of tracks, and a case where N = 24 is described. Further, numbers 1 to 14 inside the trick play areas 409 and 410 respectively correspond to the numbers of the first to fourteenth blocks corresponding to data composing the trick play image data on the memory map in Fig. 11. The number 1 corresponds to the data at the head, and the number 14 corresponds to the data at the end. NL indicates a Null packet.

When the trick play recording data is processed in units of 24 tracks (N = 24), one or more Null packets are outputted from the packet generating portion 3 until recording processing in units of 24 tracks is terminated and is stuffed in the trick play area without outputting the final stream in one trick play image data before recording processing in units of 24 tracks is terminated and then immediately starting to output a stream composing the subsequent trick play image data.

For example, in the recording of the trick play data for fast forward reproduction, when data (14 + NL) corresponding to one trick play image data has been outputted during recording processing in units of 24 tracks, NL is recorded on the trick play area until the recording processing in units of 24 tracks is terminated. When the recording processing in units of 24 tracks is terminated, recording processing for recording the subsequent trick play image data is started.

Although in Fig. 12, NL is recorded on an area subsequent to the trick play area composed of fast forward reproducing data (14 + NL) or backward reproducing data (1 + NL), the subsequent trick play image data may be recorded thereon. Even when the trick play area is stuffed with NL, trick play recording data including time information and control information may be recorded on the trick play area. Further, the whole of the one trick play area may be stuffed with NL.

As described above, in the recording apparatus according to the third embodiment of the present invention, the trick play image data is stored in one memory 23 in a predetermined order, the directions (orders) in which data is read out in a case where fast forward reproducing data is generated and a case where backward reproducing data is generated are made different from each other, to respectively generate trick play recording data for fast forward reproduction and backward reproduction. Consequently, the recording apparatus need not have memories, respectively, for generating the fast forward reproducing data and the backward reproducing data. Therefore, the capacity of the memory can be reduced to half. Further, the trick play area is stuffed with the Null packet (NL), thereby making it possible to prevent an area where no data is recorded from being generated in the trick play area.

Although in the third embodiment, description was made of a case where the Null packet to be inserted is fed from the packet generating portion 3, a predetermined number of Null packets may be stored in the memory 23 and fed.

Although in the third embodiment, description was made of a case where the Null packet is used as an invalid data packet to be stuffed, the present invention is not limited to the same. It is possible to use a dummy sync block that is an invalid sync block in the D-VHD standard.

### (Fourth Embodiment)

A fourth embodiment of the present invention differs from the first embodiment in that processing relating to a DSM trick mode is performed. A DSM trick mode flag indicates that a stream in the MPEG standard is a trickily played stream, and is arranged at a predetermined position of a PES header part. Consequently, the normal bit stream 201 to be inputted has no DSM trick mode field. When trick play recording data is generated, therefore, it is necessary to set a DSM trick mode flag and add the DSM trick mode field.

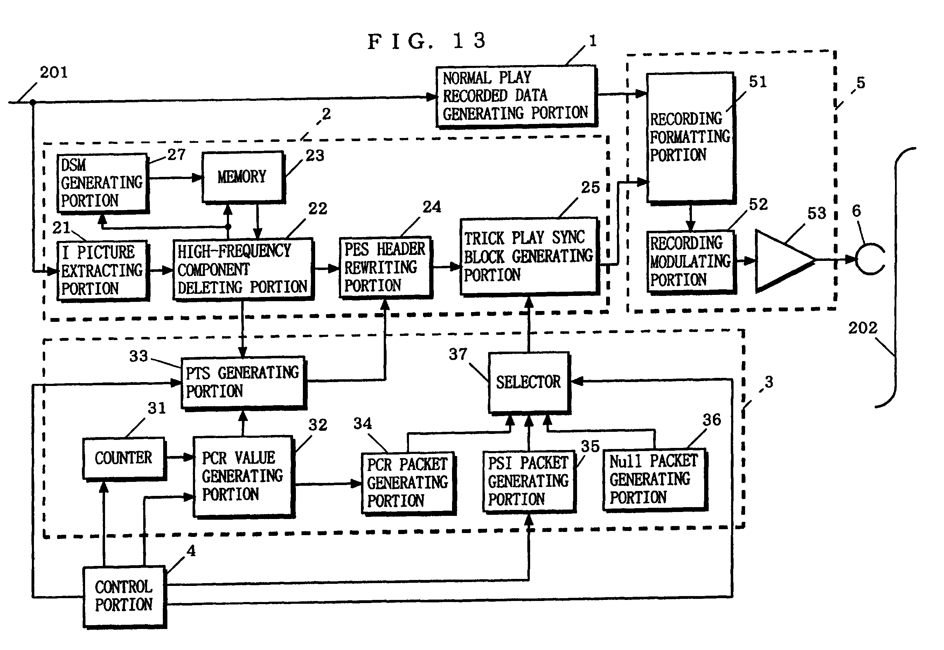

Fig. 13 is a block diagram showing the configuration of a recording apparatus according to the fourth embodiment of the present invention. In Fig. 13, the recording apparatus according to the fourth embodiment comprises the normal play recording data generating portion 1, the trick play recording data generating portion 2, the packet generating portion 3, the control portion 4, the recording portion 5, and the recording head 6.

The trick play recording data generating portion 2 comprises the I picture extracting portion 21, the high-frequency component deleting portion 22, the memory 23, the PES header rewriting portion 24, the trick play sync block generating portion 25, and a DSM generating portion 27.

As shown in Fig. 13, the recording apparatus according to the fourth embodiment has the same configuration as the recording apparatus according to the first embodiment except that the DSM generating portion 27 is added to the trick play recording data generating portion 2 in the recording apparatus according to the first embodiment. The same portions are assigned the same reference numerals and hence, the description thereof is not repeated.

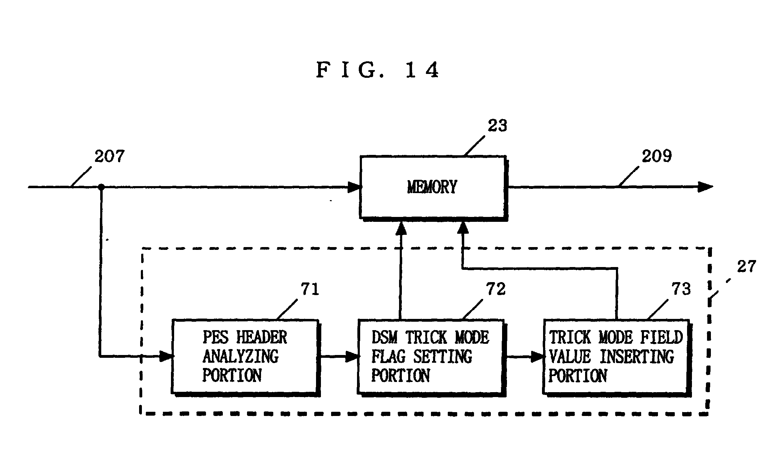

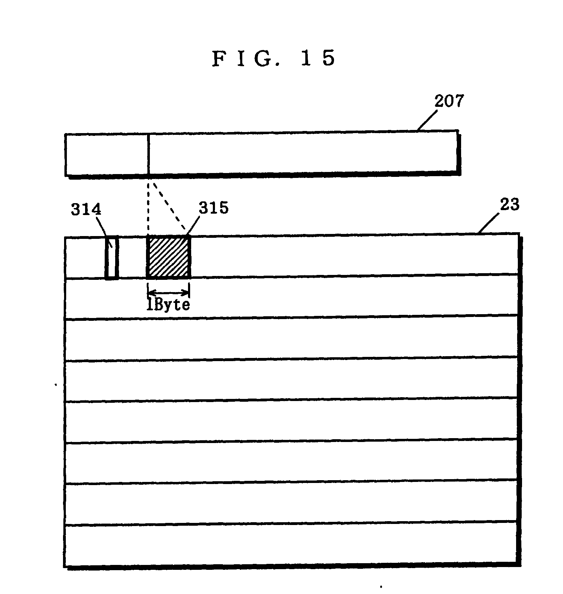

Further using Figs. 14 and 15, description is now made of the operations of the DSM generating portion 27. Fig. 14 is a block diagram showing the detailed configuration of the DSM generating portion 27 and the memory 23 shown in Fig. 13. In Fig. 14, the DSM generating portion 27 comprises a PES header analyzing portion 71, a DSM trick mode flag setting portion 72, and a trick mode field value inserting portion 73. Fig. 15 is a diagram showing an example of the structure of the memory 23.

The memory 23 receives I picture data 207 that is trick play image data from the high-frequency component deleting portion 22 and stores the data. At this time, the memory 23 previously ensures an area of a DSM trick mode field 315, which is one byte long, at a predetermined address when a DSM trick mode flag 314 is set to a value representing a DSM trick mode, while storing a DSM trick mode field included in the inputted I picture data 207 in a storage area, which is one byte long, ensured at a predetermined address when the mode has already been a DSM trick mode at the time point where a DSM trick mode flag is inputted. The reason why the DSM trick mode field 315 is previously ensured in the memory 23 is that when trick play data for fast forward reproduction and backward reproduction are generated from I picture data stored in one memory, a value corresponding to trick play conditions such as fast forward reproduction conditions or backward reproduction conditions must be inserted into the DSM trick mode field 315 at the time of data reading.

A stream in the MPEG standard is inputted in a transport packet format. When an attempt to insert 1-byte data into an arbitrary part of data in a transport packet format is made, the subsequent data must be shifted. That is, all transport packets composing the data to be inserted and the subsequent data must be reconstructed. Accordingly, the processing becomes very difficult. In the generation of the trick play recording data, the trick play image data (I picture data) is stored in the memory 23, in order to delete its higher frequency component, in a format of not a transport packet but a format of an elementary stream in which there is no limit to the length of the data. In the elementary stream, there is no limit, such as 188 byte units in the transport packet, to the length of the data. Accordingly, new data can be freely inserted into an arbitrary part. Therefore, high-frequency component deletion processing performed after the I picture data for trick play is extracted as well as insertion processing into the DSM trick mode field 315 are performed, thereby making it possible to easily perform processing.

On the other hand, the PES header analyzing portion 71 receives the I picture data 207 inputted in a transport packet format from the high-frequency component deleting portion 22, analyses a PES header part of the I picture data 207, detects the position and the value of the DSM trick mode flag and the presence or absence of the DSM trick mode field, and outputs the results of the detection to the DSM trick mode flag setting portion 72 as the results of the analysis.

When the DSM trick mode flag 314 indicated in the PES header part of the I picture data 207 stored in the memory 23 must be rewritten depending on the results of the analysis outputted from the PES header analyzing portion 71, the DSM trick mode flag setting portion 72 outputs to the memory 23 a signal for rewriting the DSM trick mode flag 314 to a value indicating that the mode is the DSM trick mode. The DSM trick mode flag setting portion 72 outputs to the trick mode field value inserting portion 73 a control signal issuing an instruction to set the DSM trick mode flag 314 and insert a trick mode field value.

The trick mode field value inserting portion 73 generates a trick mode field value corresponding to the trick play conditions of the trick play image data on the basis of the control signal outputted from the DSM trick mode flag setting portion 72, and writes the generated trick mode field value into the corresponding DSM trick mode field 315 in the memory 23. The trick mode field value inserting portion 73 generates a fixed value dedicated to fast forward reproduction as the trick mode field value in the case of trick play data in the fast forward direction, while generating a fixed value dedicated to backward reproduction as the trick mode field value in the case of trick play data in the backward direction, to write a fixed value representing the produced trick play conditions into the DSM trick mode field 315 in the memory 23. The memory 23 outputs to the high-frequency component deleting portion 22 trick play image data 209 in which the DSM trick mode flag 314 and the DSM trick mode field 315 are set.

The DSM generating portion 27 may be so constructed as not to comprise the PES header analyzing portion 71, to always insert the DSM trick mode field 315 into the whole of general trickily playing image data (I picture data) 207 to be inputted. Further, the trick mode field value may be not only written into the DSM trick mode field 315 in the memory 23 but also inserted after it is read out of the memory 23.

As described above, in the recording apparatus according to the fourth embodiment of the present invention, the DSM trick mode field 315 is previously ensured in the memory 23 storing the trick play image data, thereby making it possible to easily insert the DSM trick mode field into the stream (I picture data). Further, a trick mode field value corresponding to the trick play conditions is later set in the DSM trick mode field 315 in the trick play image data stored in the one memory 23, thereby making it possible to generate the trick play recording data for both fast forward reproduction and backward reproduction. Further, the DSM trick mode flag 314 is correctly rewritten to generate the trick play recording data, thereby making it possible to generate a trickily played stream conforming to the MPEG standard.

Various functions described in the second to fourth embodiments can be used by an arbitrary combination of a plurality of functions for the recording apparatus according to the first embodiment.

### (Fifth Embodiment)

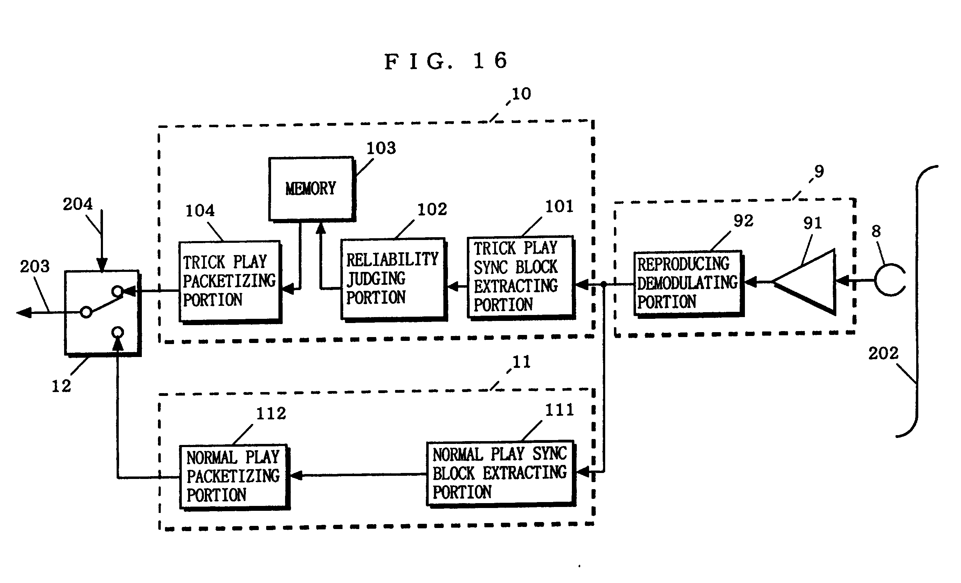

Fig. 16 is a block diagram showing the configuration of a reproducing apparatus according to a fifth embodiment of the present invention. In Fig. 16, the reproducing apparatus according to the fifth embodiment comprises a reproducing head 8, a reproducing portion 9, a trickily played stream generating portion 10, a normally played stream generating portion 11, and a reproduced stream switching portion 12.

The reproducing portion 9 comprises a reproducing amplifier 91 and a reproducing demodulating portion 92. The trickily played stream generating portion 10 comprises a trick play sync block extracting portion 101, a reliability judging portion 102, a memory 103, and a trick play packetizing portion 104. The normally played stream generating portion 11 comprises a normal play sync block extracting portion 111 and a normal play packetizing portion 112.

The operations of the reproducing apparatus according to the fifth embodiment configured as describe above will be described.

A recording medium 202 is a tape-shaped recording medium, for example, a magnetic tape. The reproducing head 8 is a head device for reproducing data recorded on the recording medium 202, for example, a magnetic head. The reproducing amplifier 91 subjects a data string reproduced by the reproducing head 8 to predetermined amplification processing, and then outputs the data string to the reproducing demodulating portion 92. The reproducing demodulating portion 92 demodulates a recording signal which has been modulated in the recording apparatus to its original recording signal (subjects the recording signal to error correction by an error correcting parity added to each sync block at the time of the demodulation). Typically, the reproducing head 8 and the reproducing portion 9 form a helical track on the magnetic tape 202 by a group of magnetic heads on a rotating drum, to reproduce normal play data and trick play data. The data string reproduced and demodulated is outputted to the trick play sync block extracting portion 101 and the normal play sync block extracting portion 111.

The trick play sync block extracting portion 101 receives the data string which has been reproduced in the reproducing demodulating portion 92 at the time of trick play, and detects synchronous data, ID data, and an error correcting parity from information representing trick play recording data, that is, a data string which has been reproduced from a trick play area inside a recording track and eliminates them from a header part of a sync block, to extract a trick play sync block. The extracted trick play sync block composes an I picture. The trick play sync block is outputted to the reliability judging portion 102.

The reliability judging portion 102 receives the trick play sync block outputted by the trick play sync block extracting portion 101, judges the reliability of the sync block from information representing the results of error correction, and stores the trick play sync block at an address corresponding to a trick play sync block number in the memory 103. When trick play sync blocks having the same trick play sync block number are reproduced, the reliability judging portion 102 stores the sync block with higher reliability in the memory 103, by priority, based on reliability information.

When the sync block with low reliability is first stored in the memory 103, and the same sync block with high reliability is then obtained, for example, data in the sync block later obtained is overwritten on data in the sync block first stored.

When data required to compose the I picture is stored in the memory 103, the trick play packetizing portion 104 reads out the data stored in the memory 103, reconstructs from the data in a sync block format data in a transport packet format, and further outputs a trickily played stream to the reproduced stream switching portion 12 in accordance with a time stamp value added to the trick play sync block at the time of recording.

Furthermore, the trick play packetizing portion 104 outputs the trickily played stream in a predetermined amount, then rewrites, when the subsequent trickily played stream is not outputted within a predetermined time interval, PTS that is time information for managing the time when a reproduced image included in the trick play recording data stored in the memory 103 is outputted to time subsequent to PTS in an I picture previously outputted and previous to PTS in an I picture to be subsequently outputted, and retransmits the trickily played stream in which the PTS has been updated. Description is made of a method of retransmitting I picture data at the time of trick play.

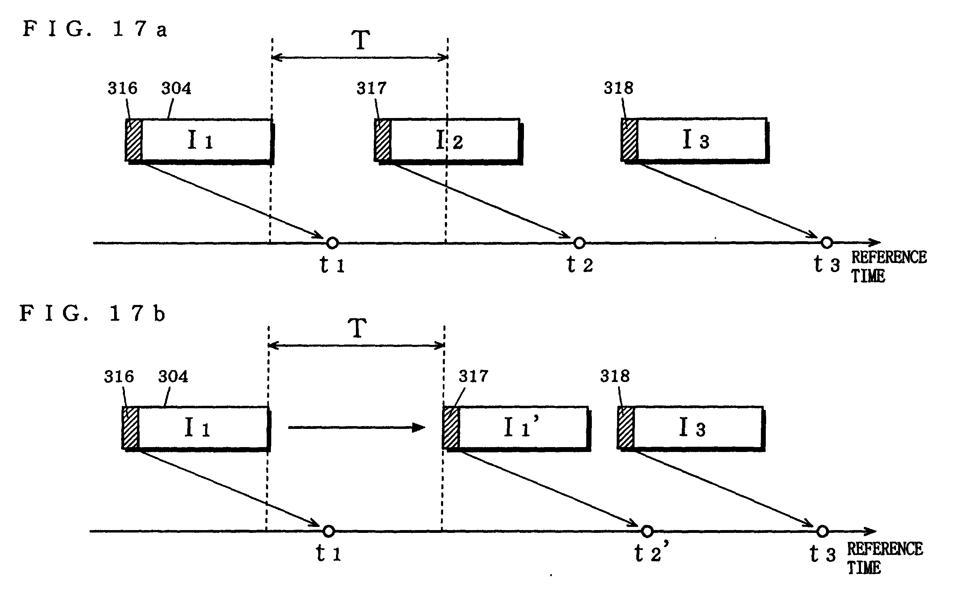

Fig. 17 is a diagram for explaining the retransmission of the I picture data in the trick play packetizing portion 104. In Fig. 17, Fig. 17 (a) illustrates a case where the previous I picture data does not need to be retransmitted, and Fig. 17 (b) illustrates a case where the previous I picture data I1 is retransmitted because the second I picture data I2 is not reproduced within a predetermined time interval T.

In Fig. 17 (a), first I picture data I1 includes a value t1 in first PTS 316 indicated in its PES header part, and is outputted when the reference time is t1 at the time of decoding. Second I picture data I2 includes a value t2 in second PTS 317 indicated in its PES header part, and is outputted when the reference time is t2 at the time of decoding. After the I picture data I1 is outputted, the subsequent second I picture data is reproduced within the predetermined time interval T. The same is true for third I picture data I3.

On the other hand, as shown in Fig. 17 (b), when second I picture data I2 is not reproduced within the predetermined time interval T for the reason that it is not completely reproduced at the time of trick play, for example, I picture data I1' obtained by rewriting a value t1 in the first PTS 316 in the first I picture data to a predetermined value t2' is retransmitted in place of the second I picture data I2 after an elapse of the predetermined time period T since the first I picture data I1 was outputted. The first I picture data I1 is not retransmitted as it is in order to avoid the possibility that the value t1 in the first PTS 316 has already been past with respect to the reference time at the time of the retransmission, so that the retransmitted I picture data I1' is not outputted. Therefore, the value t2' in PTS 317 in the I picture data I1' to be retransmitted is rewritten.

Description is made of the condition of the value t2' in the PTS 317 in the I picture data I1' to be retransmitted. In this case, the value t2' in the PTS 317 meets the condition of t1 < t2' < t3. If it is assumed that the value t2' in the PTS 317 meets the condition of t2' > t3, the second I picture data I2 is outputted when the reference time is t2'. However, a value t3 in a third PTS 318 at which the subsequent third I picture data I3 is outputted has already been past, so that the third I picture data I3 is not outputted. In order to avoid such a state, the value t2' in the PTS 317 must meet the above condition.

It is necessary that the I picture data I1' to be retransmitted is not overlapped with the subsequent third I picture data I3. Considered as an example of a method of preventing the data from being overlapped with each other is a method of not outputting the third I picture data I3, a method of delaying the timing at which data representing the end of the third I picture data I3 is outputted in a range previous to the value t3 in the third PTS 318, or a method of rewriting the value t3 in the third PTS 318 to a value subsequent to t3 to delay the output of the third I picture data I3.

The value in the PTS may be normalized in a frame update period on an image output device (not shown). Further, the predetermined time interval T may be within 700 msec determined in an MPEG standard.

Referring to Fig. 16 again, the normal play sync block extracting portion 111 receives the data string which has been reproduced in the reproducing demodulating portion 92 at the time of normal reproduction, detects synchronous data, ID data, and an error correcting parity from information representing normal play recording data, that is, a data string which has been reproduced from a normal play area inside a recording track and eliminates them from a header part of a sync block, to extract a normal play sync block, and outputs the normal play sync block to the normal play packetizing portion 112.

The normal play packetizing portion 112 reconstructs from the data in a sync block format data in a transport packet format, and outputs a normal play sync block outputted by the normal play sync block extracting portion 111 to the reproduced stream switching portion 12.

The reproduced stream switching portion 12 receives the trickily played stream outputted by the trick play packetizing portion 104, the normally played stream outputted by the normal play packetizing portion 112, and a normal reproduction/trick play mode signal 204 representing a reproduced state, and selectively switches either one of the streams in accordance with the normal reproduction/trick play mode signal 204, to output the normally played stream as the reproduced stream 203 at the time of normal reproduction, while outputting the trickily played stream as the reproduced stream 203 at the time of trick play.

As described above, according to the reproducing apparatus according to the fifth embodiment of the present invention, the trick play recording data including the time information and the control information which are reproduced at a predetermined interval which have been recorded for trick play on the recording medium 202 may be only reproduced and outputted. Therefore, the need for a circuit for newly generating time information and control information at the time of trick play is eliminated, thereby making it possible to significantly reduce the circuit scale.

When I picture data is outputted, and the subsequent I picture data cannot be then outputted within a predetermined time interval T, the same I picture data as the previous I picture data, in which PTS that is time information relating to an outputted image has been rewritten to a value subsequent to PTS in the previous I picture data and previous to PTS in the subsequent I picture data, is outputted again. Consequently, it is possible to obtain a good trickily played image which is not distorted.

Although in the first to fifth embodiments, the recording apparatuses (the first to fourth embodiments) and the reproducing apparatus (the fifth embodiment) are described as separate configurations, it goes without saying that the recording apparatus and the reproducing apparatus may be integrally configured.

### (Sixth Embodiment)

A recording/reproducing apparatus according to a sixth embodiment of the present invention comprises a trick play data generating portion 122 for outputting trick play data including no PSI serving as control information for decoding trick play data to a recording formatting portion 54, and a trick play data processing portion 132 for replacing identification information (PID) serving as information in a header part of reproduced trick play data with identification information corresponding to PSI newly generated at the time of trick play and outputting the data in which the identification information has been replaced as well as inserting the PSI newly generated within a predetermined time interval (100 ms) and outputting the data with the inserted PSI.

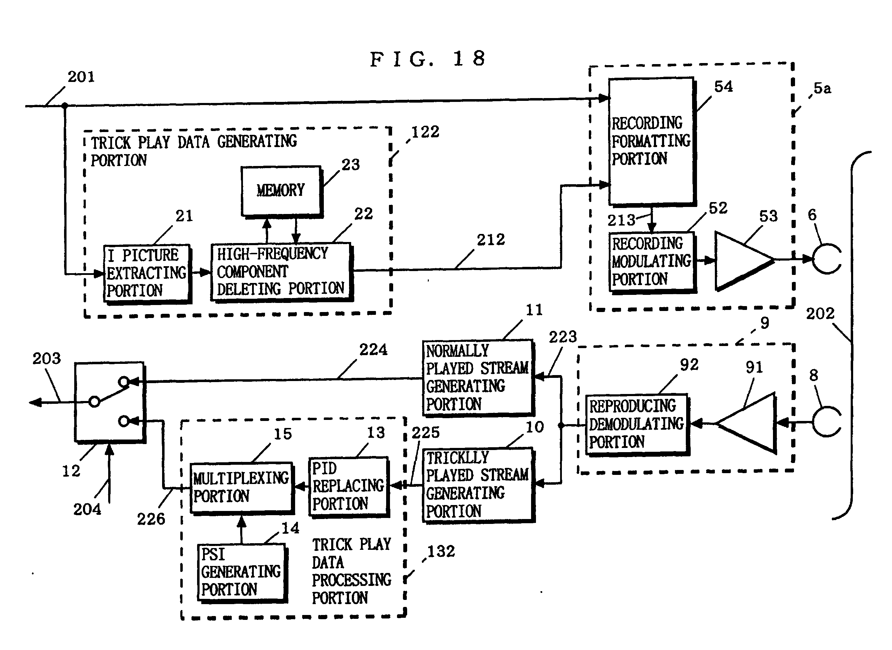

Fig. 18 is a block diagram showing the configuration of the recording/reproducing apparatus according to the sixth embodiment of the present invention. In Fig. 18, the recording/reproducing apparatus according to the sixth embodiment comprises, as a recording apparatus, a trick play data generating portion 122, a recording portion 5a, and the recording head 6, and comprises, as a reproducing apparatus, the reproducing head 8, the reproducing portion 9, the normally played stream generating portion 11, the trickily played stream generating portion 10, the trick play data processing portion 132, and the reproduced stream switching portion 12. Further, the trick play data generating portion 122 comprises the I picture extracting portion 21, the high-frequency component deleting portion 22, and the memory 23. The recording portion 5a comprises the recording formatting portion 54, the recording modulating portion 52, and the recording amplifier 53. The reproducing portion 9 comprises a reproducing amplifier 91 and the reproducing demodulating portion 92. The trick play data processing portion 132 comprises a PID replacing portion 13, a PSI generating portion 14, and a multiplexing portion 15.

In the recording/reproducing apparatus according to the sixth embodiment, the same portions as those in the recording and reproducing apparatuses according to the first to fifth embodiments are assigned the same reference numerals and hence, the description thereof is partially omitted.

The recording/reproducing operations of the recording/reproducing apparatus according to the sixth embodiment which is configured as described above will be specifically described.

Description is first made of the recording apparatus. The bit stream 201 in a transport packet format comprising a video signal and an audio signal which are coded utilizing the correlation between screens is respectively inputted to the recording formatting portion 54 and the I picture extracting portion 21 in the trick play data generating portion 122. The I picture extracting portion 21 examines a PAT packet and a PMT packet included in the bit stream 201, to extract an image data stream to be an object, and further examines its header part, to extract only a stream composing an I picture that is data coded in a frame (see Figs. 4 (a) and 4 (b)). As described in the first embodiment in the foregoing, the high-frequency component deleting portion 22 and the memory 23 delete an AC coefficient representing a high-frequency component of the coded data from the I picture data outputted from the I picture extracting portion 21, to reduce the amount of the data (see Fig. 4 (c)). The I picture data (the trick play recording data 212) which has been subjected to the high-frequency component deletion processing is outputted to the recording formatting portion 54.

The recording formatting portion 54 generates, in accordance with a recording format, the recording data string 213 for recording the bit stream 201 and the trick play recording data 212, respectively, in a normal play area and a trick play area of a recording track. The recording data string 213 is constructed in the above-mentioned sync block format. Synchronous data, ID data, and an error correcting parity are added to each sync block. The recording modulating portion 52 receives the recording data string 213 outputted by the recording formatting portion 54, converts the recording data string 213 into a signal in a format suitable for a magnetic recording/reproducing system, and outputs the signal to the recording amplifier 53. The recording amplifier 53 subjects the recording data string 213 inputted from the recording modulating portion 52 to predetermined amplification processing, and then outputs the recording data string 213 to the recording head 6. The recording head 6 successively records the recording data string 213 outputted from the recording amplifier 53 to a magnetic tape 202. Typically, the recording portion 5a and the recording head 6 form a helical track on the magnetic tape 202 by a group of magnetic heads on a rotating drum, to record normal play data and trick play data. The outline of the recording track recorded on the magnetic tape 202 is the same as that shown in Fig. 6.

Description is now made of the reproducing apparatus. A signal which has been reproduced from the recording medium 202 by the reproducing head 8 is amplified by the reproducing amplifier 91, and is then decoded to the original data string recorded by the reproducing demodulating portion 92. At the time of the demodulation, the reproducing demodulating portion 92 corrects an error by an error correcting parity added to each sync block. Reproduced data 223 obtained by the demodulation is outputted to the normally played stream generating portion 11 and the trickily played stream generating portion 10.

The normally played stream generating portion 11 eliminates synchronous data, ID data, and an error correcting parity from the reproduced data 223 outputted by the reproducing demodulating portion 92 at the time of normal reproduction, and reconstructs from the data in a sync block format data in a transport packet format to generate a normally played stream 224.

On the other hand, the trickily played stream generating portion 10 eliminates the synchronous data, the ID data, and the error correcting parity from the reproduced data 223 outputted by the reproducing demodulating portion 92 at the time of trick play, and reconstructs from the data in a sync block format data in a transport packet format to generate a trickily played stream 225. The whole of the generated trickily played stream 225 is a stream composing an I picture image, and identification information (PID) assigned to the inputted bit stream 201 is added to its header part. The trickily played stream 225 is inputted to the PID replacing portion 13 in the trick play data processing portion 132. The PSI generating portion 14 newly generates PSI. The PID replacing portion 13 replaces the PID in the header part of the extracted trickily played stream 225 with PID having a value corresponding to PAT or PMT serving as the PSI generated by the PSI generating portion 14. The multiplexing portion 15 receives the stream outputted by the PID replacing portion 13 and the PSI outputted by the PSI generating portion 14, and outputs a trickily played stream 226 obtained by multiplexing the PSI on the stream. In an MPEG 2 system, a time interval at which the PSI is multiplexed is defined as not more than 100 ms. Accordingly, the multiplexing portion 15 multiplexes each PSI on the stream at the time interval of not more than 100 ms.

The reproduced stream switching portion 12 receives the normally played stream 224 outputted by the normally played stream generating portion 11, the trickily played stream 226 outputted by the trick play data processing portion 132, and a normal reproduction/trick play mode signal 204, and selectively switches either one of the streams in accordance with the normal reproduction/trick play mode signal 204, to output a reproduced stream 203 for normal reproduction or trick play.

As described above, in the recording/reproducing apparatus according to the sixth embodiment of the present invention, PSI serving as control information for decoding is not recorded, and only trick play image data is recorded on the trick play area of the magnetic tape 202. Consequently, the data rate of the image data which can be recorded can be increased because the need for an area where the PSI is to be recorded is eliminated, thereby making it possible to obtain a high-quality trickily played image.

At the time of trick play, the identification information (PID) in the header part of the trickily played stream 225 is replaced with PID corresponding to PSI newly generated by the PSI generating portion 14, and the PID is outputted. Further, the PSI is multiplexed on the trickily played stream 225 in which the PID has been replaced within a predetermined time interval (100 ms), and the multiplexed PSI is outputted. In the magnetic tape 202 on which two or more programs which differ in PSI (PAT, PMT, etc.) are recorded, even when trick play is performed over the two or more programs which differ in PSI, therefore, the trickily played image is not distorted when the program which is trickily played is switched to the other program.

### (Seventh Embodiment)

A recording/reproducing apparatus according to a seventh embodiment of the present invention is so configured that processing performed by the trick play data processing portion 132 in the recording/reproducing apparatus according to the sixth embodiment is performed when trick play data is recorded (by a trick play data generating portion 123).

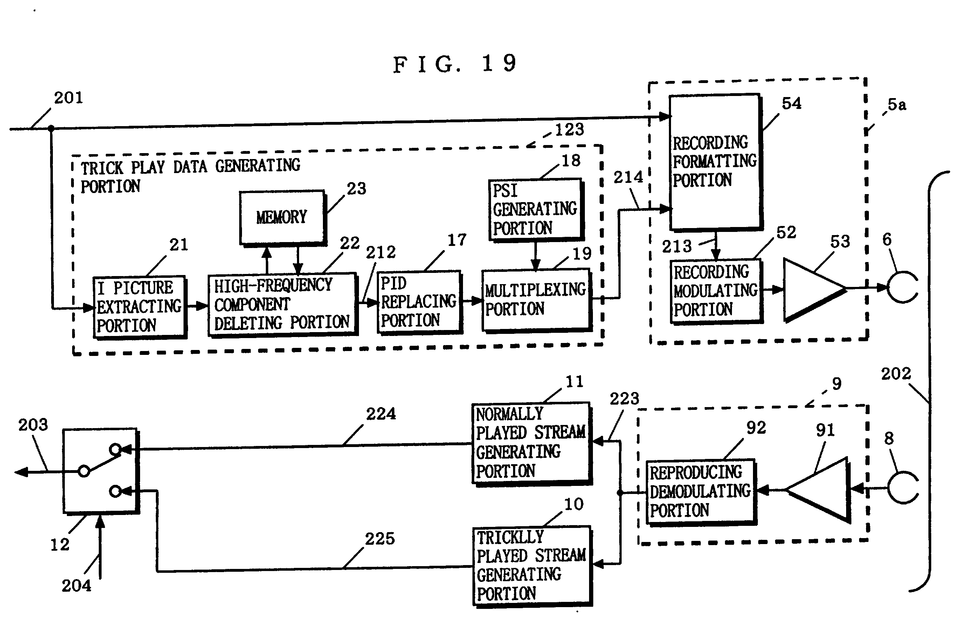

Fig. 19 is a block diagram showing the configuration of the recording/reproducing apparatus according to the seventh embodiment of the present invention. In Fig. 19, the recording/reproducing apparatus according to the seventh embodiment comprises, as a recording apparatus, the trick play data generating portion 123, the recording portion 5a, and the recording head 6, and comprises, as a reproducing apparatus, the reproducing head 8, the reproducing portion 9, the normally played stream generating portion 11, the trickily played stream generating portion 10, and the reproduced stream switching portion 12. Further, the trick play data generating portion 123 comprises the I picture extracting portion 21, the high-frequency component deleting portion 22, the memory 23, the PID replacing portion 17, a PSI generating portion 18, and a multiplexing portion 19.

In the recording/reproducing apparatus according to the seventh embodiment, the same portions as those in the recording and reproducing apparatuses according to the first to sixth embodiments are assigned the same reference numerals and hence, the description thereof is partially omitted.

The recording/reproducing operations of the recording/reproducing apparatus according to the seventh embodiment which is configured as described above will be specifically described.

Description is first made of the recording apparatus. The trick play recording data 212 outputted by the high-frequency component deleting portion 22 is inputted to the PID replacing portion 17. The PSI generating portion 18 newly generates PSI. The PID replacing portion 17 replaces identification information (PID) in a header part of the trick play recording data 212 with particular PID. The particular PID is PID having a value corresponding to PAT or PMT serving as the PSI newly generated in the PSI generating portion 18. The multiplexing portion 19 receives a stream outputted by the PID replacing portion 17 and the PSI outputted by the PSI generating portion 18, and outputs trick play recording data 214 obtained by multiplexing the PSI on the stream. In an MPEG2 system, a time interval at which PSI is multiplexed is defined as not more than 100 ms. Therefore, the multiplexing portion 15 multiplexes each PSI on the stream at the time interval of not more than 100 ms.

A recording formatting portion 54 generates a recording data string 213 for recording the bit stream 201 and the trick play recording data 214, respectively, in a normal play area and a trick play area of a recording track in accordance with a recording format. The recording data string 213 is converted into a signal in a format suitable for a magnetic recording/reproducing system in the recording modulating portion 52, and is recorded on the magnetic tape 202 through the recording head 6 upon passing through the recording amplifier 53.

Description is now made of the reproducing apparatus. A signal reproduced by the reproducing head 8 is demodulated to the reproduced data 223 that is its recorded original data string through the reproducing amplifier 91 and the reproducing demodulating portion 92, and the reproduced data 223 is outputted to the normally played stream generating portion 11 and the trickily played stream generating portion 10. The normally played stream generating portion 11 generates the normally played stream 224 from the reproduced data 223 at the time of normal reproduction. On the other hand, the trickily played stream generating portion 10 generates the trickily played stream 225 from the reproduced data 223 at the time of trick play.

The reproduced stream switching portion 12 receives the normally played stream 224 outputted by the normally played stream generating portion 11, the trickily played stream 225 outputted by the trickily played stream generating portion 10, and the normal reproduction/trick play mode signal 204, and selectively switches either one of the streams in accordance with the normal reproduction/trick play mode signal 204, to output the reproduced stream 203 for normal reproduction or trick play.

As described above, the recording/reproducing apparatus according to the seventh embodiment of the present invention differs from that according to the sixth embodiment in that PSI (PAT, PMT, etc.) is also recorded on the trick play area of the magnetic tape 202. That is, when the trick play data is recorded, PID in a header part of the trick play data generated from the bit stream 201 is replaced with PID corresponding to PSI newly generated to output the PSI, and the PSI is inserted within a predetermined time interval (100 ms) and is recorded on the trick play area of the magnetic tape 202. Consequently, the data rate of image data to be recorded on the trick play area of the magnetic tape 202 cannot be increased. In the magnetic tape 202 on which two or more programs which differ in PSI (PAT, PMT, etc.) are recorded, even when trick play is performed over the two or more programs which differ in PSI, however, a trickily played image is not distorted when the program which is trickily played is switched to the other program.

### (Eighth Embodiment)

A recording/reproducing apparatus according to an eighth embodiment of the present invention comprises a trick play data generating portion 124 for replacing, when trick play data is recorded, identification information (PID) serving as information in a header part of trick play data generated from the bit stream 201 with PID corresponding to PSI serving as control information for demodulation newly generated and outputting the PID as inserting the PSI at a second time interval (for example, approximately 10s) longer than a first time interval (100ms) and outputting the data with the inserted PSI to the recording formatting portion 54, and a trick play data processing portion 133 for detecting, at the time of trick play, PSI recorded on a trick play area of the magnetic tape 202 and inserting the PSI into a trickily played stream 225 within the first time interval and outputting the data with the inserted PSI.

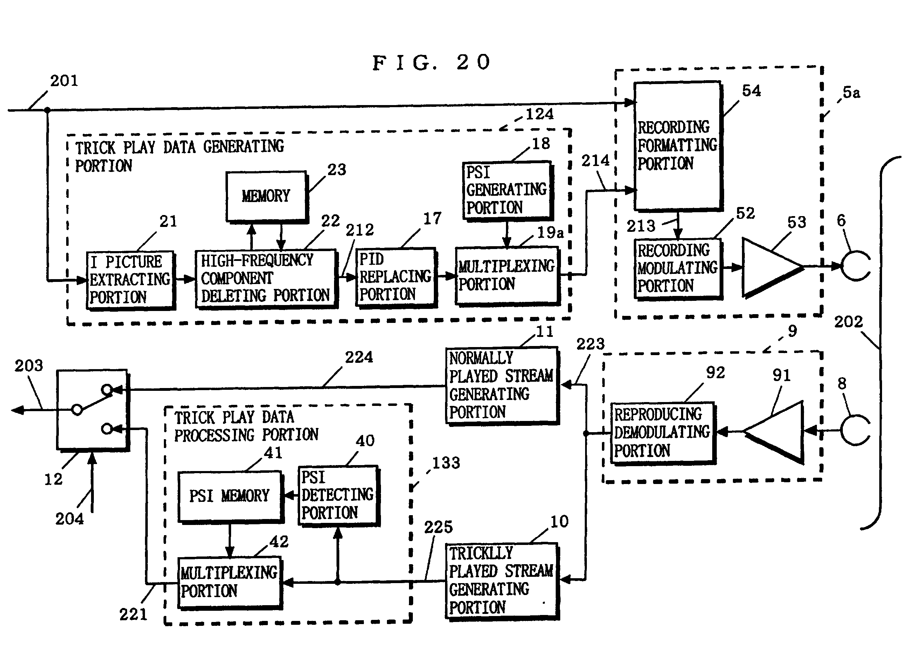

Fig. 20 is a block diagram showing the configuration of the recording/reproducing apparatus according to the eighth embodiment of the present invention. In Fig. 20, the recording/reproducing apparatus according to the eighth embodiment comprises, as a recording apparatus, the trick play data generating portion 124, the recording portion 5a, and a recording head 6, and comprises, as a reproducing apparatus, the reproducing head 8, the reproducing portion 9, the normally played stream generating portion 11, the trickily played stream generating portion 10, the trick play data processing portion 133, and the reproduced stream switching portion 12. Further, the trick play data generating portion 124 comprises the I picture extracting portion 21, the high-frequency component deleting portion 22, the memory 23, the PID replacing portion 17, the PSI generating portion 18, and a multiplexing portion 19a. The trick play data processing portion 133 comprises a PSI detecting portion 40, a PSI memory 41, and a multiplexing portion 42.

In the recording/reproducing apparatus according to the eighth embodiment, the same portions as those in the recording and reproducing apparatuses according to the first to seventh embodiments are assigned the same reference numerals and hence, the description thereof is partially omitted.

The recording/reproducing operations of the recording/reproducing apparatus according to the eighth embodiment which is configured as described above will be specifically described.

Description is first made of the recording apparatus. Trick play recording data 212 outputted by the high-frequency component deleting portion 22 is inputted to the PID replacing portion 17. The PSI generating portion 18 newly generates PSI. The PID replacing portion 17 replaces identification information (PID) in a header part of the trick play recording data 212 with particular PID. The particular PID is PID having a value corresponding to PAT or PMT serving as the PSI newly generated in the PSI generating portion 18. The multiplexing portion 19a receives a stream outputted by the PID replacing portion 17 and the PSI outputted by the PSI generating portion 18, and outputs trick play recording data 214 obtained by multiplexing the PSI on the stream. The multiplexing portion 19a multiplexes the PSI on the stream outputted from the PID replacing portion 17 at a second time interval (for example, approximately 10s) longer than the first time interval of 100 ms at the time of recording. The multiplexing portion 42, described later, multiplexes PSI which is detected from the trickily played stream 225 in the PSI detecting portion 40 and is held in the PSI memory 41 at the time of reproduction on the trickily played stream 225 within the first time interval of 100 ms, and outputs the data with the multiplexed PSI. Accordingly, the multiplexing portion 19a satisfies a time interval, at which the PSI is multiplexed, of not more than 100 ms which is defined in an MPEG2 system.

The recording formatting portion 54 generates the recording data string 213 for recording the bit stream 201 and the trick play recording data 214, respectively, in a normal play area and a trick play area of a recording track in accordance with a recording format. The recording data string 213 is converted into a signal in a format suitable for a magnetic recording/reproducing system in the recording modulating portion 52, and the signal is recorded on the magnetic tape 202 through the recording head 6 upon passing through a recording amplifier 53.

Description is then made of the reproducing apparatus. A signal reproduced by the reproducing head 8 is demodulated to reproduced data 223 that is its recorded original data string through the reproducing amplifier 91 and the reproducing demodulating portion 92, and the reproduced data 223 is outputted to the normally played stream generating portion 11 and the trickily played stream generating portion 10. The normally played stream generating portion 11 generates the normally played stream 224 from the reproduced data 223 at the time of normal reproduction. On the other hand, the trickily played stream generating portion 10 generates the trickily played stream 225 from the reproduced data 223 at the time of trick play.

The trickily played stream 225 outputted by the trickily played stream generating portion 10 is respectively outputted to the PSI detecting portion 40 and the multiplexing portion 42. The PSI detecting portion 40 receives the trickily played stream 225, and detects (extracts) PSI to be reproduced at a second time interval (the frequency of approximately once per 10s in this example). The detected PSI is held in the PSI memory 41. The multiplexing portion 42 multiplexes the PSI held by the PSI memory 41 on the trickily played stream 225, and outputs the PSI as a trickily played stream 221. The multiplexing portion 42 multiplexes each PSI on the stream at a time interval of not more than 100 ms so as to meet the requirements of the MPEG2 system.

The reproduced stream switching portion 12 receives the normally played stream 224 outputted by the normally played stream generating portion 11, the trickily played stream 221 outputted by the trick play data processing portion 133, and the normal reproduction/trick play mode signal 204, selectively switches either one of the streams in accordance with the normal reproduction/trick play mode signal 204, and outputs the reproduced stream 203 for normal reproduction or trick play.

As described above, in the recording/reproducing apparatus according to the eighth embodiment of the present invention, PSI (PAT, PMT, etc.) is multiplexed on the stream outputted from the PID replacing portion 17 at the second time interval (approximately 10s) longer than the first time interval (100ms) in the multiplexing portion 19a. Therefore, the PSI may be only recorded on a part of the trick play area of the magnetic tape 202, as compared with that in a case where it is multiplexed on the trick play area of the magnetic tape 202 at the first time interval (100ms). Consequently, the data rate of image data to be recorded on the trick play area of the magnetic tape 202 is lower by an amount of recorded PSI, as compared with that in a case where no PSI is recorded as in the sixth embodiment. However, the frequency at which the PSI is recorded on the magnetic tape 202 can be made lower, as compared with that in a case where the PSI is recorded at the first time interval (100 ms) as in the seventh embodiment. Accordingly, the data rate can be made higher. Therefore, it is possible to obtain a higher-quality trickily played image.

At the time of recording, the identification information (PID) in the header part of the trick play recording data 212 composing the I picture, which has been generated from the bit stream 201 and whose amount is reduced, is replaced with PID corresponding to PSI newly generated in the PSI generating portion 18, and the data with the PID is outputted. Further, the PSI newly generated is outputted to the recording formatting portion 54 at the second time interval longer than the first time interval and is recorded on the magnetic tape 202 by reducing the frequency at which the PSI is recorded. At the time of trick play, the PSI (PAT, PMT, etc.) multiplexed at the second time interval longer than the first time interval is detected in the PSI detecting portion 40, and the PSI is inserted into the trickily played stream 225 in the multiplexing portion 42 within the first time interval for output. Therefore, in the magnetic tape 202 on which two or more programs which differ in PSI (PAT, PMT, etc.) are recorded, even when trick play is performed over the two or more programs which differ in PSI, however, the trickily played image is not distorted when the programs are switched.

### (Ninth Embodiment)

A recording/reproducing apparatus according to a ninth embodiment of the present invention is provided with the trick play data generating portion 122 for outputting to the recording formatting portion 54 trick play data including no PSI serving as control information for decoding trick play data, and a trick play data processing portion 134 for detecting, at the time of normal reproduction, PSI included in coded data in a normal play area, and inserting, when the transition from normal reproduction to trick play occurs, the detected PSI within a predetermined time interval (100 ms) and outputting the data with the inserted PSI.

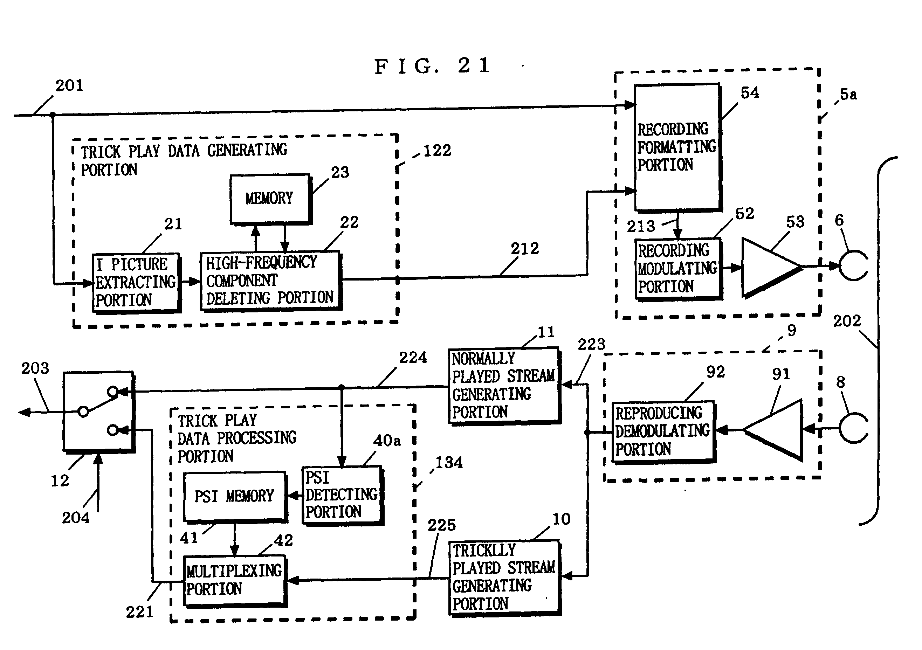

Fig. 21 is a block diagram showing the configuration of the recording/reproducing apparatus according to the ninth embodiment of the present invention. In Fig. 21, the recording/reproducing apparatus according to the ninth embodiment comprises, as a recording apparatus, the trick play data generating portion 122, the recording portion 5a, and the recording head 6, and comprises, as the reproducing apparatus, the reproducing head 8, the reproducing portion 9, the normally played stream generating portion 11, the trickily played stream generating portion 10, the trick play data processing portion 134, and the reproduced stream switching portion 12. Further, the trick play data generating portion 122 comprises the I picture extracting portion 21, the high-frequency component deleting portion 22, and the memory 23. The trick play data processing portion 134 comprises the PSI detecting portion 40a, the PSI memory 41, and the multiplexing portion 42.

In the recording/reproducing apparatus according to the ninth embodiment, the same portions as those in the recording and reproducing apparatuses according to the first to eighth embodiments are assigned the same reference numerals and hence, the description thereof is partially omitted.

The recording/reproducing operations of the recording/reproducing apparatus according to the ninth embodiment which is configured as described above will be specifically described.

The recording apparatus processes the inputted bit stream 201 for record on the magnetic tape 202, as in the sixth embodiment.

Description is made of the reproducing apparatus. A signal reproduced by the reproducing head 8 is demodulated to reproduced data 223 that is its recorded original data string through the reproducing amplifier 91 and the reproducing demodulating portion 92, and the reproduced data 223 is outputted to the normally played stream generating portion 11 and the trickily played stream generating portion 10. The normally played stream generating portion 11 generates the normally played stream 224 from the reproduced data 223 at the time of normal reproduction. On the other hand, the trickily played stream generating portion 10 generates the trickily played stream 225 from the reproduced data 223 at the time of trick play.

At the time of normal reproduction, the PSI detecting portion 40a first receives the normally played stream 224 outputted by the normally played stream generating portion 11, and detects (extracts) PSI to be reproduced. The detected PSI is held in the PSI memory 41. At the time of trick play, the multiplexing portion 42 multiplexes the PSI held by the PSI memory 41 on the trickily played stream 225, and outputs the trickily played stream 225 having the PSI multiplexed thereon as the trickily played stream 221. The multiplexing portion 42 multiplexes each PSI on the stream at a time interval of not more than 100 ms so as to meet the requirements of an MPEG2 system.

The reproduced stream switching portion 12 receives the normally played stream 224 outputted by the normally played stream generating portion 11, the trickily played stream 221 outputted by the trick play data processing portion 134, and the normal reproduction/trick play mode signal 204, selectively switches either one of the streams in accordance with the normal reproduction/trick play mode signal 204, and outputs the reproduced stream 203 for normal reproduction or trick play.

As described above, in the recording/reproducing apparatus according to the ninth embodiment of the present invention, no PSI is recorded on the trick play area of the magnetic tape 202, and only image data for trick play is recorded thereon, as in the sixth embodiment. Accordingly, the data rate of the image data can be increased because the need for an area where PSI is to be recorded is eliminated, thereby making it possible to obtain a high-quality trickily played image.

Trick play is generally performed after normal reproduction. For example, the normal reproduction is performed for a very short time of approximately 100 ms before the trick play. When normal reproduction is performed for at least approximately 100 ms, therefore, PSI can be detected from the normally played stream 224 in the PSI detecting portion 40a. At the time of the transition from normal reproduction mode to trick play mode, PSI (PAT, PMT, etc.) at the time of normal reproduction is held, and the held PSI is multiplexed on the trickily played stream 225 within the predetermined time interval (100 ms) and is outputted. Therefore, the reproduced image is not distorted at the time of the transition of the modes.

### (Tenth Embodiment)

A recording/reproducing apparatus according to a tenth embodiment of the present invention is provided with a trick play data generating portion 125 for inserting PSI serving as control information for decoding detected from the bit stream 201 into a stream outputted from the high-frequency component deleting portion 22 at a second time interval (for example, approximately 10 s) longer than a first time interval (100 ms) and outputting the data with the inserted PSI to the recording formatting portion 54 when trick play data is recorded, and the trick play data processing portion 133 for detecting PSI recorded on a trick play area of the magnetic tape 202, inserting the PSI into the trickily played stream 225 within the first time interval, and outputting the data with the inserted PSI at the time of trick play.

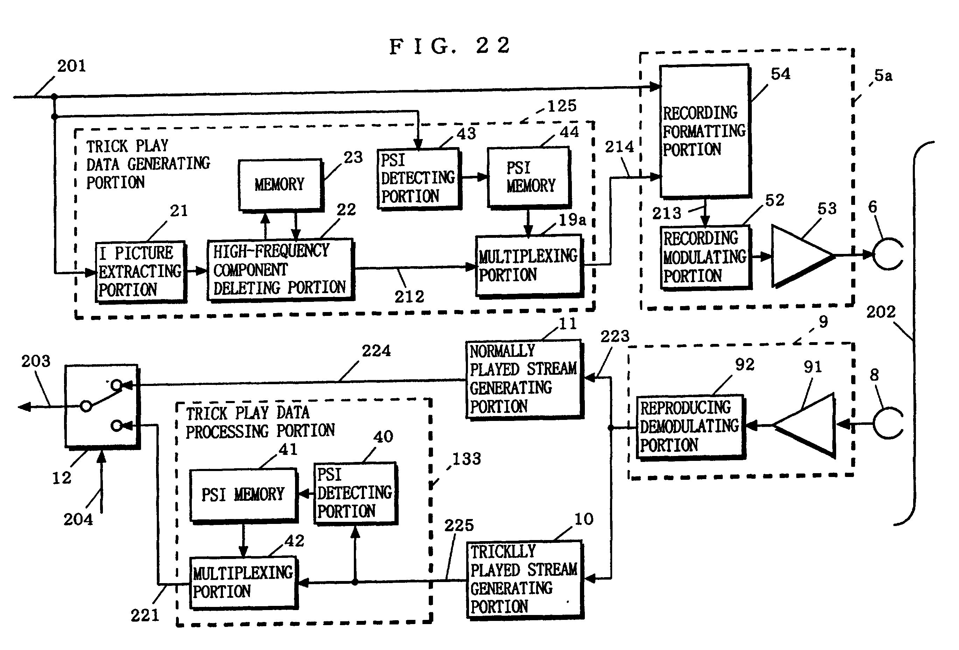

Fig. 22 is a block diagram showing the configuration of the recording/reproducing apparatus according to the tenth embodiment of the present invention. In Fig. 22, the recording/reproducing apparatus according to the tenth embodiment comprises, as a recording apparatus, the trick play data generating portion 125, the recording portion 5a, and the recording head 6, and comprises, as a reproducing apparatus, the reproducing head 8, the reproducing portion 9, the normally played stream generating portion 11, the trickily played stream generating portion 10, the trick play data processing portion 133, and the reproduced stream switching portion 12. Further, the trick play data generating portion 125 comprises the I picture extracting portion 21, the high-frequency component deleting portion 22, the memory 23, a PSI detecting portion 43, a PSI memory 44, and the multiplexing portion 19a. The trick play data processing portion 133 comprises the PSI detecting portion 40, the PSI memory 41, and the multiplexing portion 42.

In the recording/reproducing apparatus according to the tenth embodiment, the same portions as those in the recording and reproducing apparatuses according to the first to ninth embodiments are assigned the same reference numerals and hence, the description thereof is partially omitted.

The recording/reproducing operations of the recording/reproducing apparatus according to the tenth embodiment which is configured as described above will be specifically described.

Description is made of the recording apparatus. The trick play recording data 212 outputted by the high-frequency component deleting portion 22 is inputted to the multiplexing portion 19a. The bit stream 201 is also inputted to the PSI detecting portion 43. The PSI detecting portion 43 detects PSI multiplexed on the bit stream 201. The detected PSI is held in the PSI memory 44, and the held PSI is inputted to the multiplexing portion 19a. The multiplexing portion 19a receives the trick play recording data 212 that is a stream composing a compressed I picture outputted by the high-frequency component deleting portion 22, multiplexes the PSI held in the PSI memory 44 at the second time interval, and outputs the data with the multiplexed PSI as trick play recording data 214. The multiplexing portion 19a multiplexes the PSI on the trick play recording data 212 at a second time interval (for example, approximately 10s) longer than the first time interval (100 ms) at the time of recording, and outputs the trick play recording data 212 having the PSI multiplexed thereon. The multiplexing portion 42 on the side of the reproducing apparatus multiplexes PSI which is detected from the trickily played stream 225 in the PSI detecting portion 40 and is held in the PSI memory 41 at the time of reproduction on the trickily played stream 225 at not more than the first time interval of 100 ms, and outputs the trickily played stream 225 having the PSI multiplexed thereon, as described above. Accordingly, the multiplexing portion 19a satisfies a time interval, at which PSI is multiplexed, of not more than 100 mn which is defined by an MPEG2 system.

The recording formatting portion 54 generates a recording data string 213 for recording the bit stream 201 and the trick play recording data 214, respectively, in a normal play area and a trick play area of a recording track in accordance with a recording format. The recording data string 213 is converted into a signal in a format suitable for a magnetic recording/reproducing system in the recording modulating portion 52, and the signal is recorded on the magnetic tape 202 through the recording head 6 upon passing through the recording amplifier 53.

On the other hand, the reproducing apparatus performs various processing described in the eighth embodiment, and outputs the reproduced stream 203 for normal reproduction or trick play. The PSI detecting portion 40 may detect the PSI from the normally played stream 224 outputted by the normally played stream generating portion 11, as described in the ninth embodiment.

As described above, in the recording/reproducing apparatus according to the tenth embodiment of the present invention, PSI (PAT, PMT, etc.) held in the PSI memory 44 is multiplexed on the stream outputted from the high-frequency component deleting portion 22 at the second time interval (approximately 10s) longer than the first time interval (100 ms) in the multiplexing portion 19a. Therefore, the PSI may be only recorded on a part of the trick play area of the magnetic tape 202, as compared with that in a case where it is multiplexed on the trick play area of the magnetic tape 202 at the first time interval (100 ms). Consequently, the data rate of image data to be recorded on the trick play area of the magnetic tape 202 can be similarly increased, as in the eighth embodiment. Therefore, it is possible to obtain a higher-quality trickily played image.

In a case where the function of adding, when control information for decoding is changed during a recording operation, the control information for decoding which has been changed to the head of trick play data corresponding to the control information for decoding which has been changed is added to the trick play data generating portion 125 in the tenth embodiment, even when trick play is performed over two or more programs which differ in control information for decoding, new control information for decoding is multiplexed on the head of a portion where the programs are switched. Accordingly, the trickily played image is not distorted when the programs are switched.

### (Eleventh Embodiment)

A recording/reproducing apparatus according to an eleventh embodiment of the present invention is provided with a trick play data generating portion 126 for outputting, when PSI serving as control information for decoding from the bit stream 201 is changed during a recording operation, the PSI which has been changed to only the head of trick play data corresponding to the PSI which has been changed and outputting the PSI to the recording formatting portion 54, and the trick play data processing portion 135 for detecting and holding, at the time of the transition from normal reproduction to trick play, PSI included in the normally played stream 224 reproduced at the time of normal reproduction, detecting and holding PSI reproduced from a trick play area at the time of trick play, and inserting the PSI into the trickily played stream 225 at a predetermined time interval (100 ms) and outputting the data with the inserted PSI.

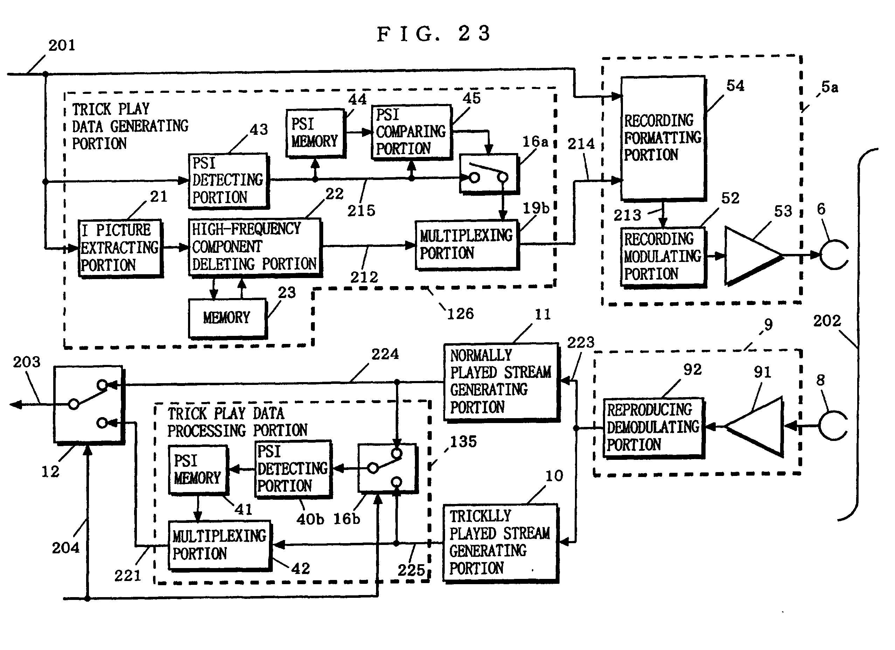

Fig. 23 is a block diagram showing the configuration of the recording/reproducing apparatus according to the eleventh embodiment of the present invention. In Fig. 23, the recording/reproducing apparatus according to the eleventh embodiment comprises, as a recording apparatus, the trick play data generating portion 126, the recording portion 5a, and the recording head 6, and comprises, as a reproducing apparatus, the reproducing head 8, the reproducing portion 9, the normally played stream generating portion 11, the trickily played stream generating portion 10, the trick play data processing portion 135, and the reproduced stream switching portion 12. Further, the trick play data generating portion 126 comprises the I picture extracting portion 21, the high-frequency component deleting portion 22, the memory 23, the PSI detecting portion 43, the PSI memory 44, a PSI comparing portion 45, the switch 16a, and the multiplexing portion 19b. The trick play data processing portion 135 comprises a switch 16b, the PSI detecting portion 40b, the PSI memory 41, and the multiplexing portion 42.

In the recording/reproducing apparatus according to the eleventh embodiment, the same portions as those in the recording and reproducing apparatuses according to the first to tenth embodiments are assigned the same reference numerals and hence, the description thereof is partially omitted.

The recording/reproducing operations of the recording/reproducing apparatus according to the eleventh embodiment which is configured as described above will be specifically described.

Description is first made of the recording apparatus. The trick play recording data 212 outputted by the high-frequency component deleting portion 22 is inputted to the multiplexing portion 19b. The bit stream 201 is also inputted to the PSI detecting portion 43. The PSI detecting portion 43 detects PSI data 215 which is multiplexed on the bit stream 201. The detected PSI data 215 is held in the PSI memory 44. The PSI comparing portion 45 compares the PSI data held in the PSI memory 44 with the PSI data 215 detected by the PSI detecting portion 43, and outputs the PSI data 215 detected by the PSI detecting portion 43 to the multiplexing portion 19b through the switch 16a if they differ from each other. The multiplexing portion 19b receives the trick play recording data 212 that is a stream composing a compressed I picture outputted by the high-frequency component deleting portion 22, multiplexes the PSI data 215 inputted through the switch 16a, and outputs the multiplexing PSI data 215 as trick play recording data 214.

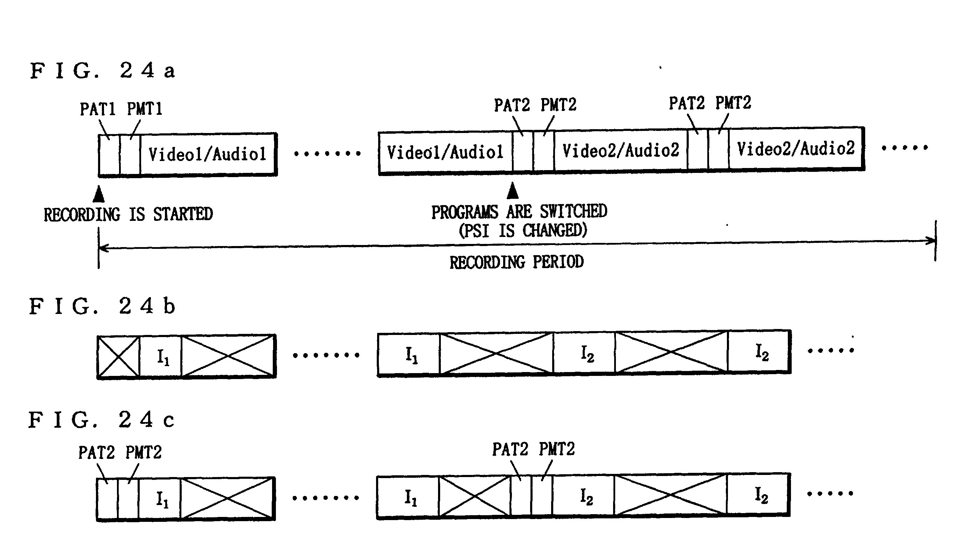

The above-mentioned PSI detection processing and PSI multiprocessing will be described in detail further using Fig. 24. As shown in Fig. 24 (a), consider a case where PSI (PAT, PMT, etc.) included in the bit stream 201 is changed into different data by switching of programs during recording. The bit stream 201 is changed into the video stream (trick play recording data) 212 composing the compressed I picture, as shown in Fig. 24 (b), through the I picture extracting portion 21 and the high-frequency component deleting portion 22. In the first program, PAT1 and PMT1 are multiplexed. When recording is started, therefore, the PAT1 and the PMT1 are multiplexed on the head of the first program (Fig. 24 (c)). Thereafter, in a time period during which the first program is recorded, the PAT and the PMT are not changed, so that the PAT and the PMT are not multiplexed. When the first program is switched to the second program, the PAT and the PMT are respectively changed into PAT2 and PMT2, so that the PAT2 and the PMT2 are multiplexed on the head of the second program (Fig. 24 (c)). Thereafter, in a time period during which the second program is recorded, the PAT and the PMT are not changed, so that the PAT and the PMT are not multiplexed. PSI is thus multiplexed on the trick play recording data 214 only when recording is started and when the PSI is changed.

The recording formatting portion 54 generates the recording data string 213 for recording the bit stream 201 and the trick play recording data 214, respectively, in a normal play area and a trick play area of a recording track in accordance with a recording format. The recording data string 213 is converted into a signal in a format suitable for a magnetic recording/reproducing system in the recording modulating portion 52, and the signal is recorded on the magnetic tape 202 through the recording head 6 upon passing through the recording amplifier 53.

Description is then made of the reproducing apparatus. A signal reproduced by the reproducing head 8 is demodulated to reproduced data 223 that is its recorded original data string through the reproducing amplifier 91 and the reproducing demodulating portion 92, and the reproduced data 223 is outputted to the normally played stream generating portion 11 and the trickily played stream generating portion 10. The normally played stream generating portion 11 generates the normally played stream 224 from the reproduced data 223 at the time of normal reproduction. On the other hand, the trickily played stream generating portion 10 generates the trickily played stream 225 from the reproduced data 223 at the time of trick play.

The switch 16b performs switching such that the normally played stream 224 and the trickily played stream 225 are inputted to the PSI detecting portion 40b, respectively, at the time of normal reproduction and at the time of trick play in accordance with a normal reproduction/trick play mode signal 204. At the time of normal reproduction, the content of PSI which is multiplexed on the normally played stream 224 is detected by the PSI detecting portion 40b, and is held in the PSI memory 41. When the mode is changed from normal reproduction to trick play, the PSI data held by the PSI memory 41 at the time of normal reproduction is first outputted to the multiplexing portion 42. The multiplexing portion 42 multiplexes the PSI data on the trickily played stream 225 within the predetermined time interval (100 ms), and outputs the trickily played stream 225 having the PSI data multiplexed thereon as the trickily played stream 221. Simultaneously, an input of the PSI detecting portion 40b is switched from the normally played stream 224 to the trickily played stream 225. Therefore, no PSI is included in the trickily played stream 225 until the PSI in a portion where programs are switched, for example, is changed, and the PSI data held in the PSI memory 41 is periodically multiplexed within the predetermined time interval (100 ms). When the PSI in the portion where the programs are switched, for example, is changed during trick play, new PSI data is multiplexed on the head of a stream composing a new program, so that the content of the PSI memory 41 is rewritten into new PSI data. Accordingly, the PSI data newly held in the PSI memory 41 is periodically multiplexed within the predetermined time interval (100 ms), as described above. In the multiplexing portion 42, each PSI is multiplexed on the stream at a time interval of not more than 100 ms in order to meet the requirements of an MPEG2 system.

The reproduced stream switching portion 12 receives the normally played stream 224 outputted by the normally played stream generating portion 11, the trickily played stream 221 outputted by the trick play data processing portion 135, and the normal reproduction/trick play mode signal 204, selectively switches either one of the streams in accordance with the normal reproduction/trick play mode signal 204, and outputs the reproduced stream 203 for normal reproduction or trick play.

As described above, in the recording/reproducing apparatus according to the eleventh embodiment of the present invention, the data rate of image data to be recorded on the trick play area of the magnetic tape 202 is lower by an amount of recorded PSI, as compared with that in the sixth embodiment. However, the PSI is recorded only when recording is started and when the PSI is changed. Consequently, the frequency at which the PSI is recorded can be made smaller, as compared with that in the eighth embodiment. Accordingly, the data rate of the image data can be made higher, as compared with that in the eighth embodiment. Therefore, it is possible to obtain a high-quality trickily played image.

Furthermore, when the PSI is changed, new PSI is recorded on the head of the trick play data. Accordingly, the trickily played image is not distorted when the programs are switched.

Although in the first to eleventh embodiments, the coded data to be inputted is changed into the bit stream 201 in the MPEG standard (MPEG2), the same effect can be produced even if the coded data to be inputted is taken as coded data in an ATV (Advanced Television) broadcasting standard.

### INDUSTRIAL APPLICABILITY

As described above, a recording/reproducing apparatus according to the present invention can be used for the purpose of obtaining a stable high-quality trickily played image at the time of trick play in simple processing without managing time for each reproduction at a predetermined number of times the speed at the time of normal reproduction in subjecting a bit stream comprising a video signal and an audio signal which are coded utilizing the correlation between screens in digital satellite broadcasting or the like to trick play (variable speed reproduction) as well as preventing a trickily played image from being distorted when programs are switched.

## Claims

1. A recording apparatus for digitally recording on a recording medium a bit stream comprising a video signal and an audio signal which are coded utilizing the correlation between screens, the apparatus comprising:
normal play recording data generation means for generating from said bit stream normal play recording data, used when normal reproduction is performed, composed of a plurality of predetermined recording blocks;
trick play recording data generation means for generating from said bit stream trick play recording data, used when reproduction at a speed different from that in normal reproduction (hereinafter referred to as trick play) is performed, composed of a plurality of predetermined recording blocks by adding information outputted by packet generation means;
said packet generation means for generating a time information packet representing time information for managing the time when a reproduced image is outputted and a control information packet representing control information for decoding said trick play recording data, and outputting the packets to said trick play recording data generation means; and
recording means for recording through a recording head said normal play recording data in a normal play area to be organized on said recording medium and said trick play recording data in a trick play area to be organized on said recording medium, wherein
said time information packet and said control information packet which are outputted from said packet generation means being respectively recorded at predetermined positions inside said trick play area in a format of said trick play recording data.

2. The recording apparatus according to claim 1, wherein said predetermined positions are provided on said recording medium in such a manner as to be arranged at least once within a predetermined time interval in synchronization with the scanning of said recording head at the time of trick play at a predetermined number of times the speed at the time of normal reproduction.

3. The recording apparatus according to claim 1, wherein said packet generation means generates said time information representing a time reference value within the predetermined time interval, and adds a predetermined fixed value corresponding to the predetermined position inside said trick play area at which said time information is recorded to the previous time information, to calculate the time reference value.

4. The recording apparatus according to claim 2, wherein said packet generation means generates said time information representing a time reference value within the predetermined time interval, and adds a predetermined fixed value corresponding to the predetermined position inside said trick play area at which said time information is recorded to the previous time information, to calculate the time reference value.

5. The recording apparatus according to claim 1, wherein
said time information for managing the time when a reproduced image is outputted is found from the time reference value to be the basis of the time information and the amount of the trick play image data extracted from said bit stream to be inputted, and
said time information is a value subsequent to said time reference value at which data representing the end of said trick play image data is outputted and normalized on the basis of a frame update period on an image display device for displaying said trick play image data.

6. The recording apparatus according to claim 4, wherein
said time information for managing the time when a reproduced image is outputted is found from the time reference value to be the basis of the time information and the amount of the trick play image data extracted from said bit stream to be inputted, and
said time information is a value subsequent to said time reference value at which data representing the end of said trick play image data is outputted and normalized on the basis of a frame update period on an image display device for displaying said trick play image data.

7. The recording apparatus according to claim 1, wherein
said time information to be added to said trick play image data is a time stamp value required to output, at the time of trick play, a trickily played stream at a time interval inputted at the time of recording, and
said time stamp value is a fixed value which is synchronized with a recording track on said recording medium and corresponds to a trick play sync block number indicated in header information of each of said plurality of predetermined recording blocks composing said trick play recording data.

8. The recording apparatus according to claim 6, wherein
said time information to be added to said trick play image data is a time stamp value required to output, at the time of trick play, a trickily played stream at a time interval inputted at the time of recording, and
said time stamp value is a fixed value which is synchronized with the recording track on said recording medium and corresponds to a trick play sync block number indicated in header information of each of said plurality of predetermined recording blocks composing said trick play recording data.

9. The recording apparatus according to claim 1, wherein
control information required to decode said bit stream comprising the video signal and the audio signal which are coded utilizing the correlation between the screens represents an identification number for identifying the structure of the bit stream and the content of data composing the bit stream, and
said control information for trick play recorded on said trick play area to be organized on said recording medium is information which depends on said control information included in said bit stream to be inputted and excludes said identification number relating to data which is not required to generate said trick play recording data (which is not extracted from said bit stream).

10. The recording apparatus according to claim 8, wherein
control information required to decode said bit stream comprising the video signal and the audio signal which are coded utilizing the correlation between the screens indicates an identification number for identifying the structure of the bit stream and the content of data composing the bit stream, and
said control information for trick play recorded on said trick play area to be organized on said recording medium is information which depends on said control information included in said bit stream to be inputted and excludes said identification number relating to data which is not required to generate said trick play recording data (which is not extracted from said bit stream).

11. The recording apparatus according to claim 1, wherein said trick play recording data generation means stores the trick play image data extracted from said bit stream in order in one memory, reads out the trick play image data stored in the memory backward (in the same direction as the order stored) to generate trick play recording data for fast forward reproduction, and reads out the trick play image data stored in the memory forward (in the direction reverse to the order stored) to generate trick play recording data for backward reproduction.

12. The recording apparatus according to claim 10, wherein said trick play recording data generation means stores the trick play image data extracted from said bit stream in order in one memory, reads out the trick play image data stored in the memory backward (in the same direction as the order stored) to generate trick play recording data for fast forward reproduction, and reads out the trick play image data stored in the memory forward (in the direction reverse to the order stored) to generate trick play recording data for backward reproduction.

13. The recording apparatus according to claim 11, wherein
said packet generation means further generates a Null packet that is invalid data in an MPEG standard, and
said trick play recording data generation means inserts, in generating said trick play recording data for fast forward reproduction and backward reproduction from said trick play image data stored in said one memory, said Null packet outputted by said packet generation means into said trick play recording data in order to compensate, when the amounts of said respective trick play recording data to be generated are less than predetermined amounts, for insufficient amounts, to fill said trick play area.

14. The recording apparatus according to claim 12, wherein
said packet generation means further generates a Null packet that is invalid data in an MPEG standard, and
said trick play recording data generation means inserts, in generating said trick play recording data for fast forward reproduction and backward reproduction from said trick play image data stored in said one memory, said Null packet outputted by said packet generation means into said trick play recording data in order to compensate, when the amounts of said respective trick play recording data to be generated are less than predetermined amounts, for insufficient amounts, to fill said trick play area.

15. The recording apparatus according to claim 11, wherein said trick play recording data generation means inserts, in generating said trick play recording data for fast forward reproduction and backward reproduction from said trick play image data stored in said one memory, a dummy sync block that is invalid data in a D-VHS standard into said trick play recording data in order to compensate, when the amounts of said respective trick play recording data to be generated are less than predetermined amounts, for insufficient amounts, to fill said trick play area.

16. The recording apparatus according to claim 1, further comprising, when said bit stream to be inputted is a bit stream conforming to an MPEG standard:
header analysis means for analyzing a PES header included in said bit stream;
DSM trick mode flag setting means for setting a DSM trick mode flag in a PES header indicating that said bit stream is trick play data to a predetermined value;
memory means for storing the trick play data extracted from said bit stream as well as previously ensuring a 1-byte area for a trick mode field at a predetermined address, to insert the trick mode field into a predetermined position of said trick play data, and previously ensuring the trick mode field at a predetermined position in the PES header of said bit stream; and
trick mode field value insertion means for inserting, when the data is read out of said memory means, predetermined data representing trick play conditions into said trick mode field.

17. The recording apparatus according to claim 14, further comprising, when said bit stream to be inputted is a bit stream conforming to an MPEG standard:
header analysis means for analyzing a PES header included in said bit stream;
DSM trick mode flag setting means for setting a DSM trick mode flag in a PES header indicating that said bit stream is trick play data to a predetermined value;
memory means for storing the trick play data extracted from said bit stream as well as previously ensuring a 1-byte area for a trick mode field at a predetermined address, to insert the trick mode field into a predetermined position of said trick play data, and previously ensuring the trick mode field at a predetermined position in the PES header of said bit stream; and
trick mode field value insertion means for inserting, when the data is read out of said memory means, predetermined data representing trick play conditions into said trick mode field.

18. The recording apparatus according to claim 1, wherein said bit stream comprising a video signal and an audio signal which are coded utilizing the correlation between screens is coded data by an MPEG system.

19. A reproducing apparatus for digitally reproducing, from a recording medium on which normal play recording data and trick play recording data is recorded, the recording data, the apparatus comprising:
reproduction means for reproducing said normal play recording data and said trick play recording data which are recorded on said recording medium through a reproducing head;
trickily played stream generation means for generating a trickily played stream from said trick play recording data which has been reproduced by said reproduction means;
normally played stream generation means for reconstructing said normal play recording data which has been reproduced by said reproduction means and generating a normally played stream; and
switching means for choosing which of said normally played stream and said trickily played stream is to be outputted as a reproduced stream depending on a reproduction mode, wherein
said trickily played stream generation means outputs the N-th (N is a positive integer) trickily played stream at the time of trick play, then rewrites, when the subsequent (N+1)-th trickily played stream cannot be outputted within a predetermined time interval, time information, which is included in the N-th trickily played stream, for managing the time when a reproduced image is outputted, to a value subsequent to time information in the N-th trickily played stream and previous to time information in the subsequent (N+2)-th trickily played stream.

20. The reproducing apparatus according to claim 19, wherein said reproduced stream is coded data by an MPEG system.

21. A recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording said recording data on said recording medium and reproducing the recording data from said recording medium; and
reproducing data generation means for reproducing said bit stream in said normal play area at the time of normal reproduction, while reproducing said trick play data in said trick play area at the time of trick play,
the recording/reproducing apparatus further comprising
trick play data generation means for outputting trick play data including no control information for decoding the trick play data to said recording data generation means, and
trick play data processing means for replacing information in a header part of said reproduced trick play data with information corresponding to control information for decoding newly generated and outputting the information as well as inserting the control information for decoding newly generated into the reproduced trick play data within a predetermined time interval and outputting the data with the inserted control information for decoding.

22. A recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording said recording data on said recording medium and reproducing the recording data from said recording medium; and
reproducing data generation means for reproducing said bit stream in said normal play area at the time of normal reproduction, while reproducing said trick play data in said trick play area at the time of trick play, the recording/reproducing apparatus further comprising
trick play data generation means for replacing, when said trick play data is recorded, information in a header part of the trick play data generated from said bit stream with information corresponding to control information for decoding newly generated and outputting the information as well as inserting the control information for decoding newly generated into the generated trick play data within a predetermined time interval and outputting the data with the inserted control information for decoding to said recording data generation means.

23. A recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording said recording data on said recording medium and reproducing the recording data from said recording medium; and
reproducing data generation means for reproducing said bit stream in said normal play area at the time of normal reproduction, while reproducing said trick play data in said trick play area at the time of trick play,
the recording/reproducing apparatus further comprising
trick play data generation means for replacing, when said trick play data is recorded, information in a header part of the trick play data generated from said bit stream with information corresponding to control information for decoding newly generated and outputting the information as well as inserting the control information for decoding newly generated into the generated trick play data at a second time interval longer than the first time interval and outputting the data with the inserted control information for decoding to said recording data generation means, and
trick play data processing means for detecting, at the time of trick play, control information for decoding which has been recorded on said trick play area of said recording medium, inserting the detected control information for decoding into said reproduced trick play data within said first time interval, and outputting the data with the inserted control information for decoding.

24. A recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording said recording data on said recording medium and reproducing the recording data from said recording medium; and
reproducing data generation means for reproducing said bit stream in said normal play area at the time of normal reproduction, while reproducing said trick play data in said trick play area at the time of trick play,
the recording/reproducing apparatus further comprising
trick play data generation means for outputting trick play data including no control information for decoding the trick play data to said recording data generation means, and
trick play data processing means for detecting, at the time of normal reproduction, control information for decoding included in said bit stream in said normal play area, inserting, when the transition from normal reproduction to trick play occurs, the detected control information for decoding into said reproduced trick play data within a predetermined time interval, and outputting the data with the inserted control information for decoding.

25. A recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording said recording data on said recording medium and reproducing the recording data from said recording medium; and
reproducing data generation means for reproducing said bit stream in said normal play area at the time of normal reproduction, while reproducing said trick play data in said trick play area at the time of trick play,
the recording/reproducing apparatus further comprising
trick play data generation means for inserting, when said trick play data is recorded, control information for decoding detected from said bit stream into said generated trick play data at a second time interval longer than a first time interval, and outputting the data with the inserted control information for decoding to said recording data generation means, and
trick play data processing means for detecting, at the time of trick play, control information for decoding which has been recorded on said trick play area of said recording medium, inserting the detected control information for decoding into said reproduced trick play data within said first time interval, and outputting the data with the inserted control information for decoding.

26. The recording/reproducing apparatus according to claim 25, wherein the function of adding, when the control information for decoding is changed during a recording operation, the control information for decoding which has been changed to the head of said trick play data corresponding to the control information for decoding which has been changed is added to said trick play data generation means.

27. A recording/reproducing apparatus comprising:
recording data generation means for generating recording data for recording a bit stream comprising a video signal and an audio signal which are coded utilizing the correlation between screens and trick play data generated from the bit stream, respectively, in a normal play area and a trick play area of a recording medium;
recording/reproduction means for recording said recording data on said recording medium and reproducing the recording data from said recording medium; and
reproducing data generation means for reproducing said bit stream in said normal play area at the time of normal reproduction, while reproducing said trick play data in said trick play area at the time of trick play,
the recording/reproducing apparatus further comprising
trick play data generation means for adding, when the control information for decoding from said bit stream is changed during a recording operation, the control information for decoding which has been changed to only the head of said trick play data corresponding to the control information for decoding which has been changed, and outputting the data with the added control information for decoding to said recording data generation means, and
trick play data processing means for detecting and holding, at the time of the transition from normal reproduction to trick play, the control information for decoding included in said bit stream which has been reproduced at the time of normal reproduction, detecting and holding, at the time of trick play, the control information for decoding which has been reproduced from said trick play area, and inserting the control information for decoding into said reproduced trick play data at a predetermined time interval and outputting the data with the inserted control information for decoding.

28. A recording method for digitally recording on a recording medium a bit stream comprising a video signal and an audio signal which are coded utilizing the correlation between screens, the method comprising the steps of:
generating from said bit stream to be inputted normal play recording data, used when normal reproduction is performed, composed of a plurality of predetermined recording blocks;
generating a time information packet representing time information for managing the time when a reproduced image is outputted and a control information packet representing control information for decoding trick play recording data;
generating from said bit stream said trick play recording data, used when reproduction at a speed different from that in normal reproduction (hereinafter referred to as trick play) is performed, composed of a plurality of predetermined recording blocks by adding said time information packet and said control information packet; and
recording through a recording head said normal play recording data in a normal play area to be organized on said recording medium and said trick play recording data in a trick play area to be organized on said recording medium, and respectively recording said time information packet and said control information packet at predetermined positions inside the trick play area in a format of said trick play recording data.

29. The recording method according to claim 28, wherein said predetermined positions are provided on said recording medium in such a manner as to be arranged at least once within a predetermined time interval in synchronized with the scanning of said recording head at the time of trick play at a predetermined number of times the speed at the time of normal reproduction.

30. The recording method according to claim 28, further comprising the step of generating said time information representing a time reference value within the predetermined time interval, and adding a predetermined fixed value corresponding to the predetermined position inside said trick play area where said time information is recorded to the previous time information, to calculate the time reference value.

31. The recording method according to claim 29, further comprising the step of generating said time information representing a time reference value within the predetermined time interval, and adding a predetermined fixed value corresponding to the predetermined position inside said trick play area where said time information is recorded to the previous time information, to calculate the time reference value.

32. The recording method according to claim 28, wherein
said time information for managing the time when a reproduced image is outputted is found from the time reference value to be the basis of the time information and the amount of the trick play image data extracted from said bit stream to be inputted, and
said time information is a value subsequent to said time reference value at which data representing the end of said trick play image data is outputted and normalized on the basis of a frame update period on an image display device for displaying said trick play image data.

33. The recording method according to claim 31, wherein
said time information for managing the time when a reproduced image is found is outputted from the time reference value to be the basis of the time information and the amount of the trick play image data extracted from said bit stream to be inputted, and
said time information is a value subsequent to said time reference value at which data representing the end of said trick play image data is outputted and normalized on the basis of a frame update period on an image display device for displaying said trick play image data.

34. The recording method according to claim 28, wherein
said time information to be added to said trick play recording data is a time stamp value required to output, at the time of trick play, a trickily played stream at a time interval inputted at the time of recording, and
said time stamp value is a fixed value which is synchronized with a recording track on said recording medium and corresponds to a trick play sync block number indicated in header information of each of said plurality of predetermined recording blocks composing said trick play recording data.

35. The recording method according to claim 33, wherein
said time information to be added to said trick play recording data is a time stamp value required to output, at the time of trick play, a trickily played stream at a time interval inputted at the time of recording, and
said time stamp value is a fixed value which is synchronized with a recording track on said recording medium and corresponds to a trick play sync block number indicated in header information of each of said plurality of predetermined recording blocks composing said trick play recording data.

36. The recording method according to claim 28, wherein
control information required to decode said bit stream comprising the video signal and the audio signal which are coded utilizing the correlation between screens represents an identification number for identifying the structure of the bit stream and the content of data composing the bit stream, and
said control information for trick play recorded on said trick play area to be organized on said recording medium is information which depends on said control information included in said bit stream to be inputted and excludes said identification number relating to data which is not required to generate said trick play recording data (which is not extracted from said bit stream).

37. The recording method according to claim 35, wherein
control information required to decode said bit stream comprising the video signal and the audio signal which are coded utilizing the correlation between screens represents an identification number for identifying the structure of the bit stream and the content of data composing the bit stream, and
said control information for trick play recorded on said trick play area to be organized on said recording medium is information which depends on said control information included in said bit stream to be inputted and excludes said identification number relating to data which is not required to generate said trick play recording data (which is not extracted from said bit stream).

38. The recording method according to claim 28, wherein in said step of generating said trick play recording data, the trick play image data extracted from said bit stream is stored in order in one memory, the trick play image data stored in the memory is read out backward (in the same direction as the order recorded) to generate trick play recording data for fast forward reproduction, and the trick play image data stored in the memory is read out forward (in the direction reverse to the order stored) to generate trick play recording data for backward reproduction.

39. The recording method according to claim 37, wherein in said step of generating said trick play recording data, the trick play image data extracted from said bit stream is stored in order in one memory, the trick play image data stored in the memory is read out backward (in the same direction as the order recorded) to generate trick play recording data for fast forward reproduction, and the trick play image data stored in the memory is read out forward (in the direction reverse to the order stored) to generate trick play recording data for backward reproduction.

40. The recording method according to claim 38, further comprising the step of generating a Null packet that is invalid data in an MPEG standard, wherein
in said step of generating said trick play recording data, in generating said trick play recording data for fast forward reproduction and backward reproduction from said trick play image data stored in said one memory, said Null packet is inserted into said trick play recording data in order to compensate, when the amounts of said respective trick play recording data to be generated are less than predetermined amounts, for insufficient amounts, to fill said trick play area.

41. The recording method according to claim 39, further comprising the step of generating a Null packet that is invalid data in an MPEG standard, wherein
in said step of generating said trick play recording data, in generating said trick play recording data for fast forward reproduction and backward reproduction from said trick play image data stored in said one memory, said Null packet is inserted into said trick play recording data in order to compensate, when the amounts of said respective trick play recording data to be generated are less than predetermined amounts, for insufficient amounts, to fill said trick play area.

42. The recording method according to claim 38, wherein in said step of generating said trick play recording data, in generating said trick play recording data for fast forward reproduction and backward reproduction from said trick play image data stored in said one memory, a dummy sync block that is invalid data in a D-VHS standard is inserted into said trick play recording data in order to compensate, when the amounts of said respective trick play recording data to be generated are respectively less than predetermined amounts, for insufficient amounts, to fill said trick play area.

43. The recording method according to claim 28, further comprising, when said bit stream to be inputted is a bit stream conforming to an MPEG standard, the steps of:
analyzing a PES header included in said bit stream;
setting a DSM trick mode flag in a PES header indicating that said bit stream is trick play data to a predetermined value;
storing the trick play data extracted from said bit stream as well as previously ensuring a 1-byte area for a trick mode field at a predetermined address, to insert the trick mode field into a predetermined position of said trick play data, and previously ensuring the trick mode field at the predetermined position in the PES header of said bit stream; and
inserting, when the data is read out at the ensuring step and the subsequent steps, predetermined data representing trick play conditions into said trick mode field.

44. The recording method according to claim 41, further comprising, when said bit stream to be inputted is a bit stream conforming to an MPEG standard, comprising the steps of:
analyzing a PES header included in said bit stream;
setting a DSM trick mode flag in a PES header indicating that said bit stream is trick play data to a predetermined value;
storing trick play data extracted from said bit stream as well as previously ensuring a 1-byte area for a trick mode field at a predetermined address, to insert the trick mode field into a predetermined position of said trick play data, and previously ensuring the trick mode field at the predetermined position in the PES header of said bit stream; and
inserting, when data is read out at the ensuring step and the subsequent steps, predetermined data representing trick play conditions into said trick mode field.

45. The recording method according to claim 28, wherein said bit stream comprising the video signal and the audio signal which are coded utilizing the correlation between screens is coded data by an MPEG system.

46. A reproducing method for digitally reproducing, from a recording medium on which normal play recording data and trick play recording data is recorded, the recording data, the method comprising the steps of:
reproducing said normal play recording data and said trick play recording data which are recorded on said recording medium through a reproducing head;
reconstructing said reproduced normal play recording data and generating a normally played stream;
generating a trickily played stream from said reproduced trick play recording data;
outputting the N-th (N is a positive integer) trickily played stream at the time of trick play, then rewriting, when the subsequent (N+1)-th trickily played stream cannot be outputted within a predetermined time interval, time information, which is included in the N-th trickily played stream, for managing the time when a reproduced image is outputted, to a value subsequent to time information in the N-th trickily played stream and previous to time information in the subsequent (N+2)-th trickily played stream; and
choosing which of said normally played stream and said trickily played stream is to be outputted as a reproduced stream depending on a reproduction mode.

47. The reproducing method according to claim 46, wherein said reproduced stream is coded data by an MPEG system.

48. A recording/reproducing method for recording and reproducing on a recording medium a bit stream comprising a video signal and an audio signal which are coded utilizing the correlation between screens, the method comprising the steps of:
generating trick play data from said bit stream such that control information for decoding trick play data is not included;
generating recording data for recording said bit stream and said trick play data, respectively, in a normal play area and a trick play area of said recording medium;
recording said recording data on said recording medium;
reproducing, at the time of normal reproduction, said bit stream in said normal play area from said recording medium while reproducing, at the time of trick play, said trick play data in said trick play area from said recording medium; and
replacing, at the time of trick play, information in a header part of said reproduced trick play data with information corresponding to control information for decoding newly generated as well as inserting the control information for decoding newly generated into the reproduced trick play data within a predetermined time interval.

49. A recording/reproducing method for recording and reproducing on a recording medium a bit stream comprising a video signal and an audio signal which are coded utilizing the correlation between screens, the method comprising the steps of:
generating trick play data from said bit stream;
replacing information in a header part of trick play data with information corresponding to control information for decoding newly generated;
inserting said control information for decoding newly generated into said generated trick play data within a predetermined time interval;
generating recording data for recording said bit stream and said trick play data, respectively, in a normal play area and a trick play area of said recording medium;
recording said recording data on said recording medium; and
reproducing, at the time of normal reproduction, said bit stream in said normal play area from said recording medium, while reproducing, at the time of trick play, said trick play data in said trick play area from said recording medium.

50. A recording/reproducing method for recording and reproducing on a recording medium a bit stream comprising a video signal and an audio signal which are coded utilizing the correlation between screens, the method comprising the steps of:
generating trick play data from said bit stream;
replacing information in a header part of trick play data with information corresponding to control information for decoding newly generated;
inserting said control information for decoding newly generated into said generated trick play data at a second time interval longer than a first time interval;
generating recording data for recording said bit stream and said trick play data, respectively, in a normal play area and a trick play area of said recording medium;
recording said recording data on said recording medium;
reproducing, at the time of normal reproduction, said bit stream in said normal play area from said recording medium, while reproducing, at the time of trick play, said trick play data in said trick play area from said recording medium; and
detecting, at the time of trick play, control information for decoding which has been recorded on said trick play area of said recording medium, and inserting the detected control information for decoding into said reproduced trick play data within said first time interval.

51. A recording/reproducing method for recording and reproducing on a recording medium a bit stream comprising a video signal and an audio signal which are coded utilizing the correlation between screens, the method comprising the steps of:
generating trick play data from said bit stream such that control information for decoding trick play data is not included;
generating recording data for recording said bit stream and said trick play data, respectively, in a normal play area and a trick play area of said recording medium;
recording said recording data on said recording medium;
reproducing, at the time of normal reproduction, said bit stream in said normal play area from said recording medium, while reproducing, at the time of trick play, said trick play data in said trick play area from said recording medium;
detecting, at the time of normal reproduction, control information for decoding included in said reproduced bit stream; and
inserting, at the time of the transition from normal reproduction to trick play, said detected control information for decoding into said reproduced trick play data within a predetermined time interval.

52. A recording/reproducing method for recording and reproducing on a recording medium a bit stream comprising a video signal and an audio signal which are coded utilizing the correlation between screens, the method comprising the steps of:
generating trick play data from said bit stream;
detecting control information for decoding from said bit stream, and inserting the control information for decoding into said generated trick play data at a second time interval longer than a first time interval;
generating recording data for recording said bit stream and said trick play data, respectively, in a normal play area and a trick play area of said recording medium;
recording said recording data on said recording medium;
reproducing, at the time of normal reproduction, said bit stream in said normal play area from said recording medium, while reproducing, at the time of trick play, said trick play data in said trick play area from said recording medium;
detecting, at the time of trick play, control information for decoding which has been recorded on said trick play area of said recording medium, and inserting the detected control information for decoding into said reproduced trick play data within said first time interval.

53. The recording/reproducing method according to claim 52, further comprising the step of adding, when the control information for decoding is changed during a recording operation, the control information for decoding which has been changed to the head of said trick play data corresponding to the control information for decoding which has been changed.

54. A recording/reproducing method for recording and reproducing on a recording medium a bit stream comprising a video signal and an audio signal which are coded utilizing the correlation between screens, the method comprising the steps of:
generating trick play data from said bit stream;
detecting control information for decoding from said bit stream, and inserting the control information for decoding into said generated trick play data at a second time interval longer than a first time interval;
adding, when said control information for decoding from said bit stream is changed during a recording operation, the control information for decoding which has been changed to only the head of said trick play data corresponding to the control information for decoding which has been changed;
generating recording data for recording said bit stream and said trick play data, respectively, in a normal play area and a trick play area of said recording medium;
recording said recording data on said recording medium;
reproducing, at the time of normal reproduction, said bit stream in said normal play area from said recording medium, while reproducing, at the time of trick play, said trick play data in said trick play area from said recording medium;
detecting and holding, at the time of the transition from normal reproduction to trick play, the control information for decoding included in said bit stream which has been reproduced at the time of normal reproduction; and
detecting and holding, at the time of trick play, said control information for decoding which has been reproduced from said trick play area, and inserting the held control information for decoding into said reproduced trick play data within a predetermined time interval.
